(19) Europäisches Patentamt
European Patent Office
Office européen des brevets

(11) EP 4 380 142 B1

(12) **EUROPEAN PATENT SPECIFICATION**

(45) Date of publication and mention of the grant of the patent:
**14.01.2026 Bulletin 2026/03**

(21) Application number: **23212224.2**

(22) Date of filing: **27.11.2023**

(51) International Patent Classification (IPC):
***H04N 1/00*** *(2006.01)* ***H04N 1/387*** *(2006.01)*
***G06F 3/12*** *(2006.01)* ***G06F 21/62*** *(2013.01)*
***H04N 1/44*** *(2006.01)* *H04N 1/32* *(2006.01)*

(52) Cooperative Patent Classification (CPC):
**H04N 1/0044; G06F 3/1222; G06F 3/1238; G06F 3/1256; G06F 3/1285; G06F 21/6245; H04N 1/00411; H04N 1/3872; H04N 1/444;**
G06F 3/1208; H04N 1/00331; H04N 1/00334; H04N 1/00872; H04N 1/32133; H04N 1/448;
(Cont.)

(54) **IMAGE PROCESSING APPARATUS, IMAGE PROCESSING METHOD, AND STORAGE MEDIUM CAPABLE OF STORING ELECTRONIC FILE INCLUDING MASK REGION WITH APPROPRIATE NAME**

BILDVERARBEITUNGSVORRICHTUNG, BILDVERARBEITUNGSVERFAHREN UND SPEICHERMEDIUM ZUR SPEICHERUNG ELEKTRONISCHER DATEIEN MIT MASKENREGION MIT GEEIGNETEM NAMEN

APPAREIL DE TRAITEMENT D'IMAGE, PROCÉDÉ DE TRAITEMENT D'IMAGE ET SUPPORT DE STOCKAGE CAPABLE DE STOCKER UN FICHIER ÉLECTRONIQUE COMPRENANT UNE RÉGION DE MASQUE AVEC UN NOM APPROPRIÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **30.11.2022 JP 2022191705**

(43) Date of publication of application:
**05.06.2024 Bulletin 2024/23**

(73) Proprietor: **CANON KABUSHIKI KAISHA**
**Tokyo 146-8501 (JP)**

(72) Inventor: **INOUE, Kenta**
**Tokyo (JP)**

(74) Representative: **WESER & Kollegen Patentanwälte PartmbB**
**Radeckestraße 43**
**81245 München (DE)**

(56) References cited:
**WO-A1-2022/189899**
**JP-A- 2019 068 323**
**JP-A- 2020 053 856**
**US-B2- 10 812 682**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
H04N 2201/0094; H04N 2201/3269

## Description

BACKGROUND OF THE INVENTION

Field of the Invention

The present invention relates to an image processing apparatus, an image processing method, and a storage medium, and more particularly, to a technique that masks a scanned image and then prints it or transmits it to a cloud service or the like to store.

Description of the Related Art

Electronic data of a scanned image generated by reading a document with a scanner may be shared with others. At this time, in the case that the scanned image is obtained by scanning a document containing personal information or confidential information, such as a personal identification document, an application document, a contract document, a design drawing, or the like, masking (so-called redacting) may be performed in which a part of the scanned image (for example, confidential matters within the scanned image) is painted black to make it invisible.

As a method of masking a part of a scanned image generated by reading a document with a scanner, there are a method of masking at a preset position, a method of manually designating a position to be masked, and the like. For example, Japanese Laid-Open Patent Publication (kokai) No. 2020-205493 discloses an information processing apparatus that performs a masking processing with respect to electronic data of N (N ≥ 2) documents on the basis of mask position designation information designating a mask position in units of pages, and generates N electronic files divided for each number of pages included in the mask position designation information.

A multifunction peripheral (MFP) having a function of cooperating with a cloud service as a save destination when a scanned image generated by a scanner is stored (saved) as an electronic file has been known, and a user is able to transmit the electronic file generated by the MFP to the cloud service designated by the user. Here, one of the purposes of transmitting the electronic file of the scanned image to the cloud service is to change the storage and sharing of the document from the conventional printed matter to the electronic file. Therefore, it is desirable that a desired electronic file can be easily obtained from a large number of stored electronic files, and as one of the methods, there is a method of using document information of the electronic file as a file name of the electronic file. In addition, for example, it is conceivable to utilize information of a character string or a barcode in the scanned image as a file name or a folder name utilizing document information in the electronic file.

At this time, whether or not the information under a masked portion may be used for the file name of the electronic file of the scanned image including the masked portion (hereinafter, referred to as "a mask region") depends on the application of the electronic file. That is, in the case that the electronic file is shared with the other person to whom the information under the mask region is not desired to be disclosed or the save destination of the electronic file is disclosed to the other person, the information under the mask region cannot be used for the file name or the folder name. On the other hand, for personal storage purposes or the like, convenience can be enhanced by using information under the mask region for the file name. In addition, there is a similar circumstance in a folder name in the case that the electronic file is stored and saved in the folder. US 10 812 682 B2, JP 2020 053856 A, WO 2022/189899 A1 and JP 2019 068323 A are further prior art documents.

SUMMARY OF THE INVENTION

The present invention provides an image processing apparatus, an image processing method, and a storage medium that are capable of storing an electronic file including a mask region with an appropriate name.

Accordingly, a first aspect of the present invention provides an image processing apparatus as specified in claims 1 to 10.

Accordingly, a second aspect of the present invention provides an image processing method as specified in claim 11.

Accordingly, a third aspect of the present invention provides a non-transitory computer-readable storage medium as specified in claim 12.

According to the present invention, it is possible to store the electronic file including the mask region with the appropriate name.

Further features of the present invention will become apparent from the following description of exemplary embodiments with reference to the attached drawings.

BRIEF DESCRIPTION OF THE DRAWINGS

FIG. 1 is a diagram showing a schematic configuration of an image processing system according to a preferred embodiment of the present invention.

FIG. 2 is a block diagram showing a hardware configuration of an MFP.

FIG. 3 is a block diagram showing a hardware configuration of an external storage.

FIG. 4 is a block diagram showing functional blocks (a software configuration) of the MFP.

FIG. 5 is a flowchart of a processing executed by the MFP.

FIG. 6 is a diagram showing an example of a masking method selection screen.

FIG. 7 is a diagram showing an example of a preset selection screen.

FIG. 8 is a diagram showing an example of a scan screen.

FIG. 9 is a flowchart of a region designation processing.

FIGs. 10A and 10B are diagrams showing examples of a preview screen.

FIGs. 11A and 11B are diagrams showing examples of region information stored in the MFP.

FIGs. 12A and 12B are diagrams showing examples of a name input screen and a save destination setting screen.

FIGs. 13A and 13B are diagrams showing examples of a processing selection screen.

FIG. 14 is a diagram showing an example of an execution confirmation screen.

FIG. 15 is a diagram showing an example of preset information stored in the MFP.

## DESCRIPTION OF THE EMBODIMENTS

The present invention will now be described in detail below with reference to the accompanying drawings showing embodiments thereof.

Hereinafter, a preferred embodiment of the present invention will be described in detail with reference to the accompanying drawings.

FIG. 1 is a diagram showing a schematic configuration of an image processing system including an image processing apparatus according to the present embodiment. The image processing system is configured by communicably connecting an MFP 110 (an image processing apparatus according to the present embodiment) and an external storage 120 via the Internet. The MFP 110 is connected to the external storage 120, which is a cloud service for providing various services on the Internet, via a local area network (LAN) (not shown) (see FIG. 2). The number of external storages 120 is not limited to one, and there are a plurality of external storages.

The MFP 110 is a multifunction peripheral having a plurality of functions such as a scanner and a printer, is an example of an image forming apparatus, and has a function of scanning a document to generate an image file and transferring the generated image file to an external storage service or the like capable of storing a file. The external storage 120 stores various data such as an image file received via the Internet, and executes a service of acquiring various data from an external device via a web browser.

FIG. 2 is a block diagram showing a hardware configuration of the MFP 110. The MFP 110 includes a controller 210, an operation unit 220, a printer unit 221, a scanner unit 222, and a modem 223. The controller 210 includes a central processing unit (CPU) 211, a read only memory (ROM) 212, a random access memory (RAM) 213, a hard disk drive (HDD) 214, an operation unit interface (I/F) 215, a printer I/F 216, a scanner I/F 217, a modem I/F 218, and a network I/F 219.

The CPU 211 reads a control program stored in the ROM 212 or the HDD 214 into the RAM 213 and executes the control program, thereby controlling the overall operation of the MFP 110 and executing various functions of the MFP 110 such as reading, printing, and communication. The ROM 212 stores programs such as an operating system (OS) executed by the CPU 211 to control the operation of the MFP 110, parameters necessary for executing the programs, and the like. The RAM 213 is used as a temporary storage unit such as a main memory and a work area of the CPU 211. It should be noted that, in the present embodiment, it is assumed that one CPU 211 executes each processing illustrated in a flowchart to be described below using one storage unit (the RAM 213 or the HDD 214). However, the present invention is not limited to such a processing form, and for example, a plurality of CPUs and a plurality of RAMs or HDDs may cooperate to execute each processing.

The HDD 214 is a mass storage unit that stores image data and various programs. The operation unit I/F 215 is an interface that connects the operation unit 220 and the controller 210. The operation unit 220 includes a display device such as a liquid crystal monitor including a touch panel, a keyboard, and the like, receives an operation by a user, and notifies the CPU 211 of an instruction according to the operation input.

The printer I/F 216 is an interface that connects the printer unit 221 and the controller 210. Printing data is transferred from the controller 210 to the printer unit 221 via the printer I/F 216, and is printed on a recording medium such as a sheet having a predetermined size in the printer unit 221. The scanner I/F 217 is an interface that connects the scanner unit 222 and the controller 210. The scanner unit 222 reads a document set on a document table or an automatic document feeder (ADF) (not shown) to generate image data, and inputs the image data to the controller 210 via the scanner I/F 217. The MFP 110 can perform copying in which the image data generated by the scanner unit 222 is output as printed matter from the printer unit 221, and can perform file transmission or mail transmission to the outside.

The modem I/F 218 is an interface that connects the modem 223 and the controller 210. The modem 223 transmits and receives image data to and from a facsimile machine (not shown) on the public switched telephone network (PSTN) by facsimile communication. The network I/F 219 is an interface that connects the controller 210 (the MFP 110) to a LAN. The MFP 110 can transmit image data and information to and receive various types of information from services on the Internet using the network I/F 219.

FIG. 3 is a block diagram showing a hardware configuration of an external storage 120. The external storage 120 includes a controller 310. The controller 310 includes a CPU 311, a ROM 312, a RAM 313, an HDD 314, and a network I/F 315.

The CPU 311 reads the control program stored in the ROM 312 to the RAM 313 and executes the control program to control the overall operation of the external storage 120. The ROM 312 stores programs that can be executed by the CPU 311, parameters necessary for executing the programs, and the like. The RAM 313 is used as a temporary storage unit such as a main memory and a work area of the CPU 311. The HDD 314 is a mass storage device that stores image data and various programs. The network I/F 315 is an interface that connects the external storage 120 to the Internet. The external storage 120 performs processing such as transmission and reception and storage of various types of information in response to a request notified from an external device such as the MFP 110 via the network I/F 315.

FIG. 4 is a diagram showing functional blocks (a software configuration) of the MFP 110. The functional blocks of the MFP 110 can be roughly divided into two functional blocks of a native function unit 410 and an additional function unit 420, and each functional unit is implemented by the CPU 211 reading a program stored in the ROM 212 or the HDD 214 into the RAM 213 and executing the program.

A scan execution part 411, an image data storage part 412, and a print execution part 413 included in the native function unit 410 are provided in the MFP 110 as standard. The additional function unit 420 includes a display control part 421, a scan instruction part 422, an image processing part 423, a data management part 424, a print instruction part 425, a data conversion part 426, and an external storage access part 427. Each part included in the additional function unit 420 is an application additionally installed in the MFP 110. The additional function unit 420 is an application based on Java (registered trademark), and thus can easily add a function to the MFP 110. It should be noted that another additional application (not shown) may be installed in the MFP 110.

Here, the functions of the functional blocks of the MFP 110 will be mainly described by exemplifying generation, image processing, storage, and printing of a scanned image.

The display control part 421 displays a user interface (UI) screen for receiving an operation by the user on a display device which is an element of the operation unit 220. For example, a UI screen for accepting an operation of scan setting or scan start, a preview of a scanned image, designation of a mask region (a region to be masked, that is, a region where masking is applied) to be described below, output setting, an output start operation, and the like is displayed on the display device of the operation unit 220.

The scan instruction part 422 requests the scan execution part 411 to execute scan processing according to the scan setting input from the UI screen. Upon receiving a scan request including scan settings from the scan instruction part 422, the scan execution part 411 drives the scanner unit 222 in accordance with the scan request to optically read a document and generate a scanned image (image data). The generated scanned image is transmitted to the image data storage part 412, and the image data storage part 412 stores the scanned image received from the scan execution part 411 in the HDD 214. At this time, the scan execution part 411 transmits an image identifier uniquely indicating the stored scanned image to the scan instruction part 422. The image identifier includes a number, a symbol, an alphabet, and the like for uniquely identifying a scanned image in the MFP 110.

The image processing part 423 performs, for example, analysis processing and processing on the scanned image. Specifically, the image processing part 423 receives the image identifier from the scan instruction part 422, and acquires the scanned image corresponding to the image identifier from the image data storage part 412. The image processing part 423 performs recognition processing such as character region analysis, optical character recognition (OCR), barcode region analysis, and image rotation and inclination correction on the acquired scanned image. Furthermore, the image processing part 423 generates a mask composite image (data) generated by combining the mask image with the scanned image in accordance with region designation processing corresponding to the mask region and the like input from the UI screen, and instructs the image data storage part 412 to store the mask composite image. It should be noted that the region designation processing will be described below with reference to the flowchart of FIG. 9 and the accompanying drawings related thereto. Then, the image processing part 423 transmits the image identifier to the print instruction part 425, the data conversion part 426, and the external storage access part 427 according to the output setting set to the mask composite image.

The data management part 424 stores information such as coordinates, a file name, and a save destination designated in the region designation processing in association with the image identifier. In addition, the data management part 424 stores the coordinates, the file name, and the save destination designated in the region designation processing in the HDD 214 as preset information.

The print instruction part 425 transmits the print processing request according to the print setting input from the UI screen and the image identifier received from the image processing part 423 to the print execution part 413. The print execution part 413 receives the print processing request and the image identifier transmitted from the print instruction part 425, acquires image data (scanned image or mask composite image) corresponding to the image identifier from the image data storage part 412, and generates printing data in response to the print processing request. The print execution part 413 transmits the generated printing data to the printer unit 221 via the printer I/F 216, and the printer unit 221 prints the scanned image or the mask composite image on a recording medium.

The data conversion part 426 acquires image data (the scanned image or the mask composite image) corresponding to the image identifier received from the image processing part 423 from the image data storage part 412, and converts the image data into a file format according to the output setting input from the UI screen. In addition, the data conversion part 426 acquires the file name corresponding to the image identifier received from the image processing part 423 from the data management part 424, sets the file name of the converted file, and transmits the converted file and the image identifier corresponding thereto to the data management part 424. The data management part 424 stores the file received from the data conversion part 426 in association with the image identifier.

The external storage access part 427 transmits a processing request to a cloud service or the like that provides a storage function (a storage service). It should be noted that the cloud service generally stores a file in a cloud storage using a protocol such as representational state transfer (REST) or simple object access protocol (SOAP), and discloses various interfaces for acquiring the stored file from an external device. The external storage access part 427 operates the cloud service by using the disclosed interface of the cloud service. In addition, the external storage access part 427 acquires the file corresponding to the image identifier received from the image processing part 423, and transmission information from the data management part 424. Then, the external storage access part 427 transmits the file acquired from the data management part 424 to the external storage 120 via the network I/F using the transmission information acquired from the data management part 424.

Next, a processing executed by the MFP 110 will be described. FIG. 5 is a flowchart showing a flow of a processing of combining a mask image with a scanned image, converting the mask image into a file, and transmitting the file to the external storage 120 (the cloud storage) in the MFP 110. Each process (step) indicated by an S number in this flowchart is achieved by the CPU 211 reading a control program stored in the ROM 212 or the HDD 214 into the RAM 213 and comprehensively controlling the operation of each unit of the MFP 110. It should be noted that, since the CPU 211 serves as each functional unit shown in FIG. 4 in each process of this flowchart, the execution subject of each process will be described as the CPU 211.

Before starting S501, the CPU 211 displays a main screen (not shown) on which buttons for executing an application provided by the MFP 110 are arranged on the display device of the operation unit 220. An additional application (hereinafter, referred to as "a masking application") that masks a partial region of a scanned image and transmits the partially masked scanned image to a cloud service can be used by additional installation to the MFP 110. When the masking application is installed in the MFP 110, a button for instructing the specification of the masking application to the CPU 211 is displayed on the main screen, and the CPU 211 starts the process of S501 when detecting the pressing of the button.

**In** S501, the CPU 211 starts (reads and executes) the masking application. **In** S502, the CPU 211 displays a masking method selection screen, which is an initial screen of the masking application, on the display device of the operation unit 220. FIG. 6 is a diagram showing an example of the masking method selection screen. A masking method selection screen 600 of FIG. 6 has a preset selection button 601 and a manual selection button 602. The preset selection button 601 is a button for displaying a setting list registered as a preset on the display device of the operation unit 220. The preset here is a function of saving and reusing setting values such as scan settings, mask regions, and file storage information once set in the HDD 214. The manual selection button 602 is an initial value of the masking application, and is a button for manually performing various settings.

**In** S503, the CPU 211 determines whether or not the preset selection button 601 is pressed (selected) on the masking method selection screen 600. **In** the case of being determined that the preset selection button 601 has been pressed (YES in S503), the CPU 211 executes the process of S504. On the other hand, in the case of being determined that the preset selection button 601 has not been pressed, that is, the manual selection button 602 has been pressed (NO in S503), the CPU 211 executes the process of S505.

**In** S504, the CPU 211 displays a preset list screen on the display device of the operation unit 220. FIG. 7 is a diagram showing an example of the preset list screen. A preset list screen 700 shown in FIG. 7 includes at least one preset button 701 and a return button 702. The preset button 701 is represented by a registered document name or the like. The CPU 211 uses the setting value stored in association with a button ID of the pressed preset button 701 in the subsequent processing. It should be noted that the button ID is an ID generated by the data management part 424 at the time of registration of the preset button 701, and includes a number, a symbol, an alphabet, and the like for uniquely identifying a registered setting value group. The return button 702 is a button for returning from the preset list screen 700 to the masking method selection screen 600.

In S505, the CPU 211 displays a scan screen. FIG. 8 is a diagram showing an example of the scan screen. A scan screen 800 of FIG. 8 includes an output setting field 801, a file format designation field 802, a scan setting field 803, a scan button 804, a page number display area 805, a return button 806, and a next button 807.

The output setting field 801 is a button for designating an output method of the masked scanned image, and one or both of printing and saving can be selected. The file format designation field 802 is enabled when an output including "save" (that is, "print and save" or "save only") is set in the output setting field 801, and is a button for designating a file format when saving the mask composite image. The scan setting field 803 is a group of buttons for setting document scan conditions, and accepts setting changes of "document size", "color", "double-sided", and "detailed settings". It should be noted that in the "detailed settings", it is possible to change and set the resolution, the image quality, the document size mixture, the density, and the like.

The scan button 804 is a button for executing document scanning under the conditions set in the scan setting field 803. In the page number display area 805, the number of scanned document pages is displayed. The return button 806 is a button for returning to the previous screen. When the return button 806 is pressed, the display is switched to the masking method selection screen 600 in FIG. 6 or the preset list screen 700 in FIG. 7 according to the route to S505. The next button 807 is a button for transitioning to a UI screen for analyzing a scanned image, and is enabled when scanning of a document is finished.

For example, when the determination in S503 is 'NO', the CPU 211 displays the scan screen 800 in a state where the output setting and the scan setting stored as the initial values of the masking application are set in the output setting field 801, the file format designation field 802, and the scan setting field 803. On the other hand, for example, in the case that the "insurance card" of the preset button 701 is selected, the CPU 211 reads the setting related to the button ID of the "insurance card". Then, the CPU 211 displays the scan screen 800 in which the read settings are reflected in the output setting field 801, the file format designation field 802, and the scan setting field 803.

When the user sets a document to be scanned on the document table or the ADF and presses the scan button 804, the CPU 211 starts the process of S506. In S506, the CPU 211 executes scanning to generate a scanned image which is image data obtained by electronizing the document, generates an image identifier uniquely indicating the generated scanned image, and stores the generated scan image and image identifier in the HDD 214 in association with each other. It should be noted that the number of scanned pages displayed in the page number display area 805 is incremented each time the generation of the scanned image for one page is completed.

When the user presses the next button 807 after the scan of the document to be scanned is completed, the CPU 211 starts the process of S507. In S507, the CPU 211 executes an analysis processing of the scanned image. The analysis processing of the scanned image is executed by the CPU 211 functioning as the image processing part 423. The image processing part 423 analyzes the character region existing in the image, and stores the coordinates of the character region and the analysis result of acquiring the characters in the character region in the HDD 214 in association with the image identifier. It should be noted that when a region determined to be a two-dimensional barcode or a three-dimensional barcode is detected in the analysis processing of the scanned image, the CPU 211 acquires coordinates of the barcode and information corresponding to the barcode, includes the information in the analysis result, and stores the information in the HDD 214 in association with the image identifier.

In S508, the CPU 211 executes a region designation processing. Here, the region designation processing will be described in detail. FIG. 9 is a flowchart of the region designation processing. Since the contents of the region designation processing vary depending on whether or not "preset" is selected on the masking method selection screen 600 and whether or not an output including "save" is selected in the output setting field 801 of the scan screen 800, the description will be given as to each case as appropriate.

In S901, the CPU 211 determines whether or not an output including "save" has been selected in the output setting field 801 of the scan screen 800 (that is, whether "print and save" or "save only" has been selected). In the case of being determined that the output including "save" has been selected (YES in S901), the CPU 211 executes the process of S902. Hereinafter, the subsequent processes in the case where "print and save" is selected in S901 will be described.

In S902, the CPU 211 determines whether or not "preset" has been pressed (selected) on the masking method selection screen 600. In the case of being determined that the "manual" button has been pressed (NO in S902), the CPU 211 executes the process of S904. Subsequently, the processes from S905 to S911 will be described on the assumption that the processing has been advanced from S902 to S904, and a case where the determination of S902 is "YES" and the process of S903 is performed will be described below.

In S904, the CPU 211 displays the preview screen on the display device of the operation unit 220. FIG. 10A is a diagram showing an example of a preview screen displayed with an initial value of the masking application. The scanned image obtained in S506 is displayed as a preview image 1002 in a preview area 1001 of a preview screen 1000 in FIG. 10 A.

The preview screen 1000 includes a delete button 1003, a reduction button 1004, a full display button 1005, an enlargement button 1006, a previous page button 1007, a page display region 1008, a next page button 1009, a color designation button 1010, and a transparent display button 1011.

The delete button 1003 is a button for deleting a mask region or an OCR region currently selected on the preview image 1002. The reduction button 1004 is a button for reducing the display magnification of the preview image 1002 to perform reduction display. The full display button 1005 is a button for changing the magnification of the preview image 1002 to the maximum magnification such that the preview image fits within the preview area 1001 and displaying the preview image. The enlargement button 1006 is a button for increasing the display magnification of the preview image 1002 to perform enlargement display. It should be noted that, in the case that the display magnification is changed to a display magnification larger than the display magnification by the full display button 1005 by operating the enlargement button 1006, a part of the preview image 1002 is not displayed in the preview area 1001. At this time, although not shown, a scroll bar for moving the display region of the preview image 1002 in the preview area 1001 is displayed in the preview area 1001.

The previous page button 1007 is a button for displaying a scanned image of a previous page as the preview image 1002 in the case that there are a plurality of pages of scanned images. In the page display region 1008, the page number of the currently displayed scanned image and the total number of pages are displayed. The next page button 1009 is a button for displaying a scanned image of the next page as the preview image 1002 in the case that there are a plurality of pages of scanned images.

The color designation button 1010 is a button for designating a color (a color of masking) to be applied to the mask region. The transparent display button 1011 is a button for semi-transparent display of the mask region on the preview image 1002. By enabling the semi-transparent display, the preview image 1002 is displayed in a mode in which the user can visually recognize the character string or the like under the mask region.

The preview screen 1000 includes first to fifth mode switching buttons 1012 to 1016. The first to fifth mode switching buttons 1012 to 1016 are buttons for adding or selecting various regions within the preview screen 1000, and these buttons are exclusively switched so that only one can be selected.

The first mode switching button 1012 is a button for switching to a mode for selecting a mask region already added (set) to the preview image 1002. The second mode switching button 1013 is a button for switching to a mode for adding a new mask region to the preview image 1002. The third mode switching button 1014 is a button for switching to a mode for designating a character region of a character string to be used for a file name or a folder name among character strings on the preview image 1002. The fourth mode switching button 1015 is a button for switching to a mode for designating a barcode region to be used for a file name or a folder name among barcodes on the preview image 1002. The fifth mode switching button 1016 is a button for switching to a mode in which an image registered in advance in the MFP 110 is inserted as a mask.

Various regions can be added or designated in a state where any one of the second to fourth mode switching buttons 1013 to 1015 is selected by the user touching the preview area 100 with a finger or the like. For example, when detecting a touch operation in the preview area 1001, the CPU 211 starts drawing a rectangle starting from the touch position. When the user moves the finger while touching the screen (touch panel) of the display device of the operation unit 220 and then it is detected that the finger has moved from the screen, the CPU 211 displays a rectangle having the point as an end point. The rectangular region is a newly added mask region, a newly designated character region, or a newly designated barcode region.

**In** the case of the mode of adding the mask region, the color set by the color designation button 1010 is reflected on the inserted rectangle, and the coordinates and color of the start point and the end point of the rectangle are stored in the HDD 214. **In** the case of the mode for designating the character region, the CPU 211 acquires and stores the character string included in the coordinates of the inserted rectangle and the coordinates thereof from the analysis result of the scanned image executed in S507. At that time, the selected character string may be displayed in an easy-to-understand manner for the user by surrounding the corresponding character string on the preview image 1002 with a line or the like. **In** the case of the mode for designating the barcode region, the CPU 211 acquires, from the analysis result of the scanned image executed in S507, the coordinates of the barcode included in the coordinates of the inserted rectangle and the value (a number, a character string, or the like) read from the barcode, and stores the coordinates and the value. At that time, the selected barcode may be displayed in an easy-to-understand manner for the user by surrounding the barcode on the corresponding preview image with a line or the like.

Upon detecting the pressing of the fifth mode switching button 1016, the CPU 211 displays a screen (not shown) displaying a list of images registered as masks on the display device of the operation unit 220. Upon detecting that the user selects one of the images, the CPU 211 inserts the selected image into the preview area 1001. When the insertion of the image is completed, the first mode switching button 1012 is automatically switched to be enabled, and the movement of the image and the adjustment of the size can be performed.

The preview screen 1000 is provided with an external storage 120 set as a save destination of a scanned image or the like in the MFP 110 and a save destination display area 1017 for displaying a folder path. As the folder name of the folder path of the save destination, a character string or a value of a barcode acquired from the scanned image can be used, which will be described in detail below. The save destination display area 1017 is provided with an edit button 1018 for displaying an edit screen for setting or changing the external storage or the folder path as the save destination on the display device of the operation unit 220.

The preview screen 1000 is provided with a file name display area 1019 for displaying a file name set for the scanned image (the mask composite image). Similarly to the folder name, a character string or a value of a barcode in the scanned image can be used as the file name. The file name display area 1019 is provided with an edit button 1020 for displaying an edit screen for setting or changing a file name on the display device of the operation unit 220.

The preview screen 1000 includes a return button 1021 for returning to the previous scan screen 800 and a next button 1022 for completing the operation of the preview screen 1000 and proceeding to the next processing.

FIG. 10B is an example of a screen showing a state in which the mask region and the character region are designated for the preview image 1002, and shows a state in which the mask regions 1023 to 1026 are designated in the preview image 1002 by the user. The mask regions 1023 to 1026 are displayed as a rectangle filled with any color designated as the mask color. In addition, labels (balloon illustrations and character descriptions) of "mask 1" to "mask 4" for distinguishing each region are displayed adjacent to each of the mask regions 1023 to 1026. A label "OCR1" indicating a character region is displayed in a character region 1027 overlapping with the mask region of the mask 4.

The mask region 1023 is a mask region being selected in the mode in which the first mode switching button 1012 is selected. The mask region 1023 is highlighted, for example, by displaying a thick frame so that the user can easily recognize the selected state. It should be noted that the color of the frame indicating the mask region being selected can be changed using the color designation button 1010. Furthermore, in the mask region 1023, square icons are displayed on four sides and four corners in order to make the user recognize that the mask region can be re-edited. When the user drags and moves one square icon, a point or a line on which the square on the diagonal line is displayed serves as a start point, and enlargement and reduction of the mask region can be performed in a direction moved from the start point. Therefore, the user can adjust the shape and size of the mask region by dragging the square icon. It should be note that, in the case that a mask region (a mask region that is not highlighted) other than the selected mask region is dragged, the mask region moves according to the drag operation while maintaining the current size.

When the delete button 1003 is pressed in the case that there is a selected mask region, masking of the selected mask region is released. The display mode of the delete button 1003 may be controlled so as to be enabled only in the case that there is a selected mask region. For example, upon detecting the pressing of the delete button 1003 in the state of FIG. 10B, the CPU 211 deletes the color and highlight of the mask applied to the mask region 1023 and deletes the coordinate information stored corresponding to the mask region.

In the mask regions 1023 to 1026, information such as a character string in each region can be visually recognized. This is because the transparent display button 1011 is enabled (selected). When the selection of the transparent display button 1011 is released, the state changes to a state in which the user cannot visually recognize the character string or the like in the mask regions 1023 to 1026.

The character region 1027 in the preview image 1002 includes a character string in the mask region 1026 designated by the mode in which the third mode switching button 1014 is selected. Unlike the mask region, the character region is displayed in a frame without a color of filling. At this time, a label such as "OCR1" is displayed separately from "mask 4" and the like so that the character region and the mask region can be distinguished from each other. It should be noted that the color of the frame indicating the character region can be changed using the color designation button 1010.

FIG. 11A is a diagram showing region information such as coordinates stored for each designated region on the preview screen 1000 in FIG. 10B. Region information 1100A in FIG. 11A includes an ID 1101, a type 1102, a start point 1103, an end point 1104, and a value 1105.

The ID 1101 is a value uniquely indicating each piece of region information. The type 1102 indicates a type of the region, and includes a mask, a character, a barcode, an image, and the like. The start point 1103 is a value indicating the start point of the region, and is represented by coordinates (X, Y) indicating the position in the horizontal direction and the vertical direction with the upper left of the preview image 1002 as the origin. The end point 1104 is a value indicating the end point of the region, and is indicated by the coordinates of the lower right point of the region. Therefore, each region is represented by a rectangle in which the coordinates of the start point 1103 are set as the upper left point and the coordinates of the end point 1104 are set as the lower right point.

The value 1105 is information related to each region, and is a mask color (a color code) in the case of a mask region, a character string acquired by OCR in the case of a character region, a character string acquired from a barcode in the case of a barcode region, and a path of an image used in the case of an image inserted from another. FIG. 11A shows that four mask regions (MSK1 to MSK4) and one character region (OCR1) corresponding to the region information of the preview area 1001 in FIG. 10B are stored. It should be noted that FIG. 11B will be described below.

Next, a method of setting a file name of a scan composite image will be described. Upon detecting the pressing of the edit button 1020 of the file name, the CPU 211 causes the preview screen 1000 to transition to a name input screen. FIG. 12A is a diagram showing an example of the name input screen. A name input screen 1230 in FIG. 12A includes a display area 1231 that displays a set file name. It should be noted that the name input screen 1230 corresponds to the preview screen 1000 in FIG. 10B.

First to fourth input auxiliary areas 1232 to 1235 used for inputting a file name are displayed on the name input screen 1230. In the first input auxiliary area 1232, a button group for inputting a fixed text is provided, and any text or a separator character (a hyphen, an underbar, a blanks, and the like) prepared in advance can be input to the file name. For example, in the case that "text" is selected, a text input keyboard (not shown) is displayed on the display device of the operation unit 220, and the user can input any text.

In the second to fourth input auxiliary areas 1233 to 1235, a group of buttons for inputting a variable value whose value changes according to the scan date and time and information acquired from the scanned image to a file name is provided. The second input auxiliary area 1233 is provided with buttons for inputting date and time information at the time of scanning to a file name, and the date and time information can be easily input to the file name by inputting using each button of "year/month/day/hour/minute/second".

The third input auxiliary area 1234 is provided with a button for inputting character information acquired from the character region designated in the preview area 1001 to a file name. Here, the character string in the character region 1027 of FIG. 10B is displayed as one button, and the number corresponding to the label of the character region is displayed as the identification information on the button. When the button displayed in the third input auxiliary area is pressed, the character string (here, 987654321) in the button is added to the file name. It should be noted that in the third input auxiliary area 1234, when there is a plurality of character regions, the corresponding number of buttons are displayed, and when there is no character region, "no region designated" is displayed.

The fourth input auxiliary area 1235 is provided with a button for inputting character information acquired from the barcode region designated in the preview area 1001 to a file name. It should be noted that in FIG. 12A, "no region designated" indicating that no region designation is performed is displayed, and no button is displayed. This is because, although the barcode region is the mask region 1025 of "mask 3" on the preview screen 1000 in FIG. 10B, the barcode region is not a barcode region designated for the purpose of acquiring character information as shown in FIG. 11B, which will be described below. When a button is displayed in the fourth input auxiliary area 1235, similarly to the third input auxiliary area 1234, a button including a number corresponding to a label of a barcode region and a character string acquired from the barcode is displayed.

The name input screen 1230 has a name route display area 1236 in which buttons provided in the first to fourth input auxiliary areas 1232 to 1235 are used for input is displayed. In the name route display area 1236, the text input from the first input auxiliary area 1232 is displayed as it is, but the inputs from the buttons displayed in the second to fourth input auxiliary areas 1233 to 1235 are displayed in the form of [variable name]. The "variable name" includes information related to the name of each button. In the example of FIG. 12A, it can be seen that "year", "month", and "day" in the second input auxiliary area 1233 and "[1]" in the third input auxiliary area 1234 are used as information other than the fixed values (here, "Scan" and "_").

The name input screen 1230 is provided with a delete button 1237 for deleting the character string input to the file name. The delete button 1237 deletes characters one by one from the end of the character string of the file name, but when the deletion target is other than a fixed value, the character strings corresponding to [variable name] in the name route display area 1236 are collectively deleted by one-time deletion. For example, in the example of FIG. 12A, when the delete button 1237 is pressed, the character strings of "987654321" corresponding to [OCR1] are collectively deleted. At this time, [OCR1] corresponding to the deleted character string is also deleted from the name route display area 1236.

The name input screen 1230 is provided with a cancel button 1238 and a determine button 1239. The cancel button 1238 is a button for canceling the editing on the name input screen 1230, closing the name input screen 1230, and redisplaying the preview screen 1000. The determine button 1239 is a button for confirming editing on the name input screen 1230, saving the input contents, closing the name input screen 1230, and redisplaying the preview screen 1000. The confirmed file name is displayed in a file name display area 1019 of the preview screen 1000. The information in the name route display area 1236 is stored as a setting value of the preset button 701 at the time of information registration to the preset button 701. Therefore, when a preset is selected when the masking application is used for a scanned image of another document, the setting value corresponding to the variable value changes according to the scan date and time of the other document and information acquired from the scanned image. Therefore, by using the preset information, a file name utilizing the information of the scanned document can be easily set.

Next, a method of setting a file save destination will be described. Upon detecting the pressing of the edit button 1018 on the preview screen 1000, the CPU 211 causes the preview screen 1000 displayed on the display device of the operation unit 220 to transition to a save destination setting screen. FIG. 12B is a diagram showing an example of the save destination setting screen. A save destination setting screen 1240 in FIG. 12B includes a save destination setting field 1241, a root folder setting area 1242, first to third sorting folder areas 1243 to 1245, a cancel button 1246, and a determine button 1247.

In the save destination setting field 1241, an external storage as a transmission destination of the scanned image can be set, and "cloud A" is set here.

In the root folder setting area 1242, a root folder under the external storage set in the save destination setting field 1241 can be set, and a path of the currently set root folder and a reference button for selecting the root folder are displayed. Upon detecting the pressing of the reference button in the root folder setting area 1242, the CPU 211 starts connection to the external storage set in the save destination setting field 1241. When authentication is required to access the external storage set in the save destination setting field 1241, a screen (not shown) required for the authentication is displayed. When the authentication is completed, a list of folders that can be used under the settable external storage is displayed in the save destination setting field 1241, and the user can select a desired folder and change the root folder. In the example of FIG. 12B, it can be seen from the root folder setting area 1242 that the "application documents" folder immediately below the service of "cloud A" is set as the root folder.

The first to third sorting folder areas 1243 to 1245 are areas for setting a sorting route of folders. In each of the first to third sorting folder areas 1243 to 1245, an area for displaying a set folder name and an edit button are displayed.

In a "sorting folder 1" in the first sorting folder area 1243, a folder name immediately below the root folder set in the root folder setting area 1242 is set. In a "sorting folder 2" of the second sorting folder area 1244, a folder name immediately below the "sorting folder 1" is set. In a "sorting folder 3" of the third sorting folder area 1245, a folder name immediately below the "sorting folder 2" is set. Therefore, it is possible to set folder sorting routes for three hierarchies in the first to third sorting folder areas 1243 to 1245 starting from the root folder in the root folder setting area 1242.

Setting of each folder in the first to third sorting folder areas 1243 to 1245 can be performed by an edit button provided in each area. Upon detecting the pressing of any of the edit buttons in the first to third sorting folder areas 1243 to 1245, the CPU 211 displays a name input screen equivalent to the name input screen 1230 in FIG. 12B on the display device of the operation unit 220. It should be noted that the description of the name input screen displayed here is omitted since it conforms to the description of the name input screen 1230. The folder names of the folders in the first to third sorting folder areas 1243 to 1245 can be easily set by combining the variable values input from the second to fourth input auxiliary areas 1233 to 1235 to make use of the information on the scanned documents. In the example of FIG. 12B, a state in which [year] is set in the "sorting folder 1" is shown.

The cancel button 1246 is a button for canceling (discarding) the contents on the save destination setting screen 1240, closing the save destination setting screen 1240, and redisplaying the preview screen 1000 on the display device of the operation unit 220. The determine button 1247 is a button for confirming and saving the contents on the save destination setting screen 1240, closing the save destination setting screen 1240, and redisplaying the preview screen 1000. Upon detecting the pressing of the determine button 1247, the CPU 211 stores the setting on the save destination setting screen 1240 and displays the set information in the save destination display area 1017. At this time, the CPU 211 displays the storage name, the root folder path, and the sorting folder name in one so that the user can easily understand the path of the save destination.

The description refers back to the flowchart of FIG. 9. When the setting of the preview screen 1000 is completed in S904 and the next button 1022 is pressed, the CPU 211 checks the positional relationship between the character region and the barcode region, and the mask region in S905. Specifically, the CPU 211 determines whether or not there is a region overlapping the character region, the barcode region, and the mask region (hereinafter, referred to as "an overlapping region"). For example, in the case of the region information of FIG. 11A, since "OCR1" is a character region, it is checked whether there is an overlapping region between the region of "OCR1" and the regions of "MSK1 to MSK4" which are other mask regions.

The presence or absence of the overlapping region can be determined by comparing the coordinates of the start point and the end point. Specifically, in the case that the start point coordinates of one of the two regions are (Xa1, Ya1), the end point coordinates thereof are (Xa2, Ya2), the start point coordinates of the other region are (Xb1, Yb1), and the end point coordinates thereof are (Xb2, Yb2), the following Formulae 1 to 4 are compared. As a result, it is found that there is an overlapping region when one or more of the values of the X coordinate and one or more of the values of the Y coordinate are satisfied in the following Formulae 1 to 4. That is, the case where there is an overlapping region refers to a case where the entire character region is included in the mask region, a case where a part of the character region overlaps the mask region, a case where the entire barcode region is included in the mask region, and a case where a part of the barcode region overlaps the mask region. In addition, the reverse comparison is performed by the following Formulae 5 to 8. When one or more values of the X coordinate and one or more values of the Y coordinate are satisfied in the following Formulae 5 to 8, it is understood that there is an overlapping region.

[Mathematical formula 1]

| | |
|---|---|
| Formula 1 | $Xb1 < Xa1 < Xb2$ |
| Formula 2 | $Xb1 < Xa2 < Xb2$ |
| Formula 3 | $Yb1 < Ya1 < Yb2$ |
| Formula 4 | $Yb1 < Ya2 < Yb2$ |
| Formula 5 | $Xa1 < Xb1 < Xa2$ |
| Formula 6 | $Xa1 < Xb2 < Xa2$ |
| Formula 7 | $Ya1 < Yb1 < Ya2$ |
| Formula 8 | $Ya1 < Yb2 < Ya2$ |

In the example of FIG. 11A (FIG. 13A), since the coordinates of the start point and the end point of "OCR1" are within the range of the coordinates of "MSK4", it can be understood that MSK4 overlaps so as to cover the entire OCR1. It should be noted that the method for determining the presence or absence of the overlapping region is an example, and the present invention is not limited thereto, and the presence or absence of the overlapping region may be determined using another method.

In S906, the CPU 211 determines whether or not one or more overlapping regions have been found on the basis of the check result in S905. In the case of being determined that the overlapping region is found (YES in S906), the CPU 211 executes the process of S907, and in the case of being determined that the overlapping region is not found (NO in S906), the CPU executes the process of S909. In the example of FIG. 11A, since OCR1 and MSK4 overlap each other, the determination result of S906 is "YES", and the process of S907 is executed.

In S907, the CPU 211 displays a processing selection screen on the display device of the operation unit 220. FIG. 13A is a diagram showing an example of the processing selection screen corresponding to the region information of FIG. 11A. A processing selection screen 1300A of FIG. 13A includes a preview area 1301 indicating a character region and a barcode region each having an overlapping region. In order for the user to easily recognize the overlapping region, the label is displayed only in the character region, the barcode region, and the mask region having the overlapping region. At this time, it is desirable that the user can more easily notice the overlapping region by, for example, displaying the mask region where the label is displayed in a transparent color.

The processing selection screen 1300A includes a region number display area 1302 indicating the number of discovered overlapping regions and a display area of first to third options 1303 to 1305 for selecting processing to be executed for the overlapping regions. The first option 1303 is an option in which there is no problem in the current state of the overlapping region, the mask region and the character region are maintained, and no processing is performed. The second option 1304 is an option of instructing processing of releasing (removing) the designation of the mask region of the overlapping region. It should be noted that the file name is not changed in the case where first option 1303 is selected and the case where second option 1304 is selected.

The third option 1305 is an option of instructing processing of releasing (canceling) the use of the character region (or the barcode region) under the mask region. When the processing of the third option 1305 is executed, the use of the character information for the folder name and the file name is released, and thus, the file name and the folder name after execution of the third option 1305 are displayed together in the display area of the third option 1305. As a result, the user can determine whether or not the processing by the third option 1305 may be executed. It should be noted that, in the case of the processing selection screen 1300A, after the processing of the third option 1305 is executed, the designation of the entire region of "OCR1" is released.

It should be noted that, in the present embodiment, the processing for the overlapping region is selected using the first to third options 1303 to 1305, but the contents of the options to be displayed may be changed according to the setting of the masking application. For example, in the case that it is desired to prohibit the use of the character string under the mask region for the file name, it may be possible to separately set the first option 1303 to be hidden.

The processing selection screen 1300A is provided with a cancel button 1306 and a confirm button 1307. The cancel button 1306 is a button for canceling (discarding) the display content on the processing selection screen 1300A, closing the processing selection screen 1300A, and redisplaying the preview screen 1000 in FIG. 10B. The confirm button 1307 is a button for executing processing selected from among the first to third options 1303 to 1305.

It should be noted that the processing selection screen 1300A shows an example in which one overlapping region is found. In the case that a plurality of overlapping regions is found, for example, in the case that two overlapping regions are found and the first one thereof is displayed in the preview area 1301, "selection of processing (1/2)" is displayed in the region number display area 1302. Then, by changing the confirm button 1307 to buttons such as "next" and "previous", the processing for the overlapping region can be selected in order. At this time, the confirm button is displayed or the next button cannot be selected on the screen for selecting the processing for the last overlapping region. As a result, it is possible to recognize that the selected processing has been executed for all the overlapping regions.

Upon detecting that the processing of any one of the first to third options 1303 to 1305 is selected and the confirm button 1307 is pressed, the CPU 211 executes the processing of S908. In S908, the CPU 211 executes the selected processing and updates the region information, the save destination, and the information of the file name.

In S909, the CPU 211 stores information such as coordinates and values of the character region, the barcode region, and the mask region in the HDD 214 as a final result. Here, in addition to the case where the entire character region is included in the mask region as shown in the processing selection screen 1300A of FIG. 13A, an example in which the character region and the mask region partially overlap will also be described. FIG. 13B is a diagram showing another example of the processing selection screen. FIG. 11B is a diagram showing region information corresponding to the processing selection screen of FIG. 13B.

Region information 1100B in FIG. 11B indicates that the region of "OCR1" and the region of "MSK4" partially overlap each other as shown in the preview area 1301 of processing selection screen 1300B in FIG. 13B. In this case, the process of releasing the use of the character information under the mask region of the third option 1305 is executed only for the overlapping region. Therefore, information use of "321" that does not overlap with the mask region of "MSK4" in the character string "987654321" in the character region of "OCR1" is not released even when third option 1305 is executed. Specifically, the X coordinate of the start point of "OCR1" is the value of the X coordinate of the end point of "MSK4". Then, when the processing of the third option 1305 is executed, the X coordinate of the start point of the region information of "OCR1" in FIG. 11B changes from "330" to "471", and the value also changes from "987654321" to "321". Furthermore, as displayed together with third option 1305, character information of "321" remains in the file name.

On the processing selection screen 1300B, an option selection option 1308 for enlarging the mask region of the partial overlapping region to the entire overlapping region, that is, for enlarging the mask region to the entire region of the character region (and the barcode region) is provided. The option selection option 1308 is displayed only when the partial overlapping region is the processing target, and thus, is displayed on the processing selection screen 1300B of FIG. 13B, but is not displayed on the processing selection screen 1300A of FIG. 13A.

Although not shown, when an option is selected on the processing selection screen 1300B in FIG. 13B (when the check box of the option selection option 1308 is checked), the region of "mask 4" is expanded to the entire region of "OCR1". In this case, in FIG. 11B, the X coordinate of the end point of "MSK4" is the same as the X coordinate of the end point of "OCR1". Specifically, the X coordinate of the end point of the MSK4 is changed from "471" to "509", and accordingly, the display of the file name when the third option 1305 is executed is changed to that in which "321" is deleted.

According to the processes of S905 to S909, the following effects can be obtained. That is, by displaying the processing selection screens 1300A and 1300B in the case that there is an overlapping region, it is possible to notify the user of a setting mistake of the mask region and a setting mistake of using information under the mask region. In addition, the user can select and execute an appropriate processing while viewing the preview area 1301 on the processing selection screens 1300A and 1300B. It should be noted that in the case of being determined in S906 that there is no overlapping region (NO in S906), the processes in S907 and S908 are not executed, and the current region information is stored in the HDD 214 as a final result in S909.

When the region information is confirmed in S909, the CPU 211 generates a folder path from the set information in S910. In S911, the CPU 211 generates a file name. In S912, the CPU 211 combines (top-coating process) the mask region designated for the scanned image with the image of the designated color and stores the image in the HDD 214, and then ends the present process, thereby ending the process of S508. It should be noted that the processes of S913 to S916 will be described below.

The description refers back to the flowchart of FIG. 5. When the region designation processing in S508 is completed, the CPU 211 displays an execution confirmation screen on the display device of the operation unit 220 in S509. FIG. 14 is a diagram showing an example of the execution confirmation screen. An execution confirmation screen 1400 of FIG. 14 includes a print setting display area 1401, a confirmation display area 1402, an option selection option 1403, a return button 1404, and an execution button 1405.

The print setting display area 1401 is displayed when an item including "print" is selected in the output setting field 801. In the print setting display area 1401, the number of copies can be set, and settings of duplex printing, paper size, imposition, and the like can be changed by pressing a button of "Other print settings".

The confirmation display area 1402 is displayed when an item including "save" is selected in the output setting field 801. In the confirmation display area 1402, setting values of the save destination and the file name set on the preview screen 1000 are displayed. The option selection option 1403 has a check box, and by checking the check box, various regions and various setting information of this time can be registered as a preset. The return button 1404 is a button for returning to the preview screen 1000. The execution button 1405 is a button for executing printing, saving, and preset registration.

When the execution button 1405 is pressed, the CPU 211 determines whether or not to perform preset registration in S510. In the determination in S510, it is determined that the preset registration is to be performed when the check box of the option selection option 1403 is checked. Upon determining to perform the preset registration (YES in S510), the CPU 211 executes the process of S511, and upon determining not to perform the preset registration (NO in S510), the CPU executes the process of S513.

In S511, the CPU 211 displays a preset name setting screen (not shown) on the display device of the operation unit 220, and accepts the input of the preset name from the user. At this time, the user can register the contents to be preset-registered with any preset name. When the preset name is input, in S512, the CPU 211 stores various setting contents such as the current various regions, setting information, and preset name in the HDD 214 in association with the button ID of the preset button 701.

FIG. 15 is a diagram showing an example of the preset information stored in the HDD 214 in S511. The preset information 1500 in FIG. 15 includes the button ID 1501 of the preset button 701, the preset name 1502 input by the user in S511, and the output method 1503 and the scan setting 1504 set on the scan screen 800.

The preset information 1500 includes region information 1505 and save settings 1506 set on the preview screen 1000, and print settings 1507. The region information 1505 stores coordinate information such as a mask region and a character region. However, since the character information acquired from the character region or the like changes depending on the document, the information is not registered in the "value" of the region information 1505. In the save setting 1506, a name route and a folder path route are stored, but specific values (character strings) are not registered since character information acquired from a character region or the like varies depending on a document. **In** the print settings 1507, the contents of the print settings on the execution confirmation screen 1400 are registered. In this way, by registering various regions and various settings once set as presets, it is possible to easily perform processing in the masking application for documents of the same format in the next and subsequent times by using the presets.

In S513, the CPU 211 determines whether or not setting for printing has been made. In the case of being determined that the setting to perform printing has been made (YES in S513), the CPU 211 executes the process of S514, and in the case of being determined that the setting not to perform printing has been made (NO in S513), the CPU executes the process of S515. In S514, the CPU 211 executes printing processing of the mask composite image.

In S515, the CPU 211 determines whether or not setting for saving has been made. In the case of being determined that the setting for saving has been made (YES in S515), the CPU 211 executes the process of S516, and in the case of being determined that the setting for saving has not been made (NO in S515), this processing is terminated.

**In** S516, the CPU 211 executes save processing of the mask composite image, and then ends the process. At this time, the mask composite image is converted into the file format designated on the scan screen 800. Further, the mask composite image is transmitted to the save destination (for example, the external storage 120) designated on the preview screen 1000 with the designated file name, and the saving in the save destination is completed. When the masking application processing is completed in this way, the CPU 211 executes screen switching processing of the display device of the operation unit 220. The new screen at that time may be the masking method selection screen 600 for the next scan, or may be a main screen (not shown).

Next, a case where it is determined in S902 of the region designation processing in S508 that "preset" has been pressed on the masking method selection screen 600 will be described. In the case of being determined that "preset" has been pressed in S902 (YES in S902), the CPU 211 executes the process of S903. Hereinafter, the processes of S903 to S912 will be described focusing on the difference from the case where it is determined that the "manual" has been pressed on the masking method selection screen 600.

In S903, the CPU 211 acquires region information and setting information of the button ID selected on the preset list screen 700. In S904, the CPU 211 displays the preview screen reflecting the setting acquired in S903. For example, in the case that the preset information shown in FIG. 15 is used, the preview screen is displayed in a state where various selection regions and setting information are reflected as illustrated in FIG. 10B. Therefore, unlike the case where "manual" is selected in S902, it is possible to save time and effort for region designation and save setting.

Upon detecting that the next button 1022 is pressed in FIG. 10B, for example, the CPU 211 executes the processing in and after S905. Since the processes of S905 to S912 in this case is similar to the processes when "manual" is selected in S902 described above, the description thereof will be omitted.

When the processing of the flowchart of FIG. 9 ends, that is, when the region designation processing of S508 is completed, the CPU 211 displays the execution confirmation screen 1400 on the display device of the operation unit 220 in a state of reflecting the print setting related to the button ID in S509. At this time, the option selection option 1403 as to whether or not to register the setting contents of the execution confirmation screen 1400 as a preset may be hidden when there is no change in the region designation processing in S508. Upon detecting that the execution button 1405 is pressed on the execution confirmation screen 1400, the CPU 211 determines whether or not to perform preset registration in S510. If there is no change in the preset content, the determination result of S510 is "No", and thereafter, the printing and saving processes (S513 to S516) are executed in the same manner as described above.

Next, a case where it is determined in S901 of the region designation processing in S508 that "print only" is selected in the output setting field 801 of the scan screen 800 will be described. In the case of being determined that the item including "save" has not been pressed in S901, that is, "print only" has been pressed (NO in S901), the CPU 211 executes the process of S913.

In S913, the CPU 211 determines whether or not "preset" has been pressed (selected) on the masking method selection screen 600. In the case of being determined that "preset" has been pressed (YES in S913), the CPU 211 executes the process of S914, and in the case of being determined that "manual" has been pressed (NO in S913), the CPU executes the process of S915.

In S914, the CPU 211 acquires region information and the like related to the button ID selected on the preset list screen 700, as in S903.

In S915, the CPU 211 displays the preview screen 1000. At this time, although not shown, the third mode switching button 1014, the fourth mode switching button 1015, the save destination display area 1017, the edit button 1018, the file name display area 1019, and the edit button 1020, which are items used for saving, are hidden (not shown). Therefore, as when the item including "save" is selected, the determination processes (S906 to S908) as to whether there is an overlapping region is not performed.

When the next button 1022 on the preview screen 1000 is pressed, the CPU 211 stores information on the mask region in S916 as in S909. Thereafter, in S912, the CPU 211 combines the mask region designated for the scanned image with the image of the designated color, and stores the composite image in the HDD 214. When the region designation processing in S508 is completed, the CPU 211 displays the execution confirmation screen 1400 on the display device of the operation unit 220 in S509. At this time, although not shown, the confirmation display area 1402 related to the save processing is not displayed because it is unnecessary. Upon detecting the pressing of the execution button 1405 on the execution confirmation screen 1400, the CPU 211 executes the processes of S510 to S515.

The preferred embodiment of the present invention has been described above. When data suitable for a scanned image is stored using character information acquired from the scanned image that needs to be masked, it is necessary to pay attention whether there is no problem in using character information of a mask region in the scanned image for a file name or a folder name. Meanwhile, in the present embodiment, the mask region, and the character region and the barcode region used for the file name and the folder name are simultaneously displayed on the preview screen of the scanned image. As a result, it is possible to reduce the risk of erroneously using information under the mask region in the scanned image.

Furthermore, according to the present embodiment, even in the case that the user does not notice that the mask region overlaps the character region or the barcode region (there is an overlapping region), the processing selection screen is displayed, so that it is possible to notify the user that there is an overlapping region. As a result, when masking the scanned image and saving the file, it is possible to use only information that has no problem even if it is shared with others as a file name and save the file.

Although the present invention has been described in detail based on the preferred embodiments thereof, the present invention is not limited to the disclosed exemplary embodiments, but by the scope of the following claims.

For example, the image processing system in FIG. 1 includes the MFP 110 and the external storage 120, but the image processing system according to the present invention is not limited to such a configuration. For example, some of the functions and processes of the MFP may be performed by another server disposed on the Internet or a LAN. In addition, the external storage may be disposed not on the Internet but on a LAN. Furthermore, the external storage may be replaced with a mail server or the like, and the scanned image may be attached to a mail and transmitted. The MFP may also have a storage function of the external storage.

## Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., ASIC) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments, but by the scope of the following claims.

This application claims the benefit of Japanese Patent Application No. 2022-191705, filed on November 30, 2022.

## Claims

1. An image processing apparatus (110) comprising: a controller (210) configured or programmed to function as:

    a display control unit (211) that controls a display device (220) to display a preview of a scanned image;
    a first designation section (211) configured to designate a first region where masking is applied to the scanned image; and
    a second designation section (211) configured to designate a second region including character information to be used for storing the scanned image, and
    **characterized in that**, in a case that there is an overlapping region in which the first region and the second region overlap, the display control unit displays the preview so that a user is able to recognize the overlapping region.

2. The image processing apparatus according to claim 1, wherein,
if the display control unit controls the display device to display the overlapping region on the preview, the display control unit further controls the display device to display options, which allow the user to select a processing to be executed for the overlapping region, together with the displayed overlapping region.

3. The image processing apparatus according to claim 2, wherein
the options include at least one of a first processing that maintains the first region and the second region, a second processing that releases designation of the first region, and a third processing that releases use of character information obtained from the overlapping region.

4. The image processing apparatus according to claim 3, wherein
the display control unit further controls the display device to display information, which is used when the third processing is selected and for storing the scanned image, together with the option of the third processing, and wherein the displayed information does not include the character information obtained from the overlapping region.

5. The image processing apparatus according to claim 3 or 4, wherein
in a case that the overlapping region is a region in which a part of the second region and the entire first region overlap, the displayed option further include a fourth processing, which expands the first region to the entire second region in the options.

6. The image processing apparatus according to any one of claims 1 to 5, wherein
the display control unit controls the display device to display the first region so that the user is able to visually recognize character information in the overlapping region.

7. The image processing apparatus according to any one of claims 1 to 6, wherein
the display control unit controls the display device to display a label for distinguishing the first region and the second region in the preview so as to be adjacent to each of the first region and the second region.

8. The image processing apparatus according to any one of claims 1 to 7, wherein
the display control unit controls the display device to display the first region and the second region in the preview by changing at least one of a color of the masking, a color of a frame indicating each of the first and second regions.

9. The image processing apparatus according to any one of claims 1 to 8, wherein
the character information is used in a folder name or a file name of the scanned image.

10. The image processing apparatus according to any one of claims 1 to 9,

    wherein, in a case that the scanned image is stored, the display control unit controls the display device to further display at least one of a file name of the scanned image and a folder name to store the scanned image, the file name and the folder name including the character information obtained from the second region, and
    wherein, in a case that the scanned image is not stored, the display control unit controls the display device not to display the file name and the folder name including the character information obtained from the second region.

11. An image processing method comprising:

    a step of displaying a preview of a scanned image on a display device (220);
    a step of designating a first region where masking is applied to the scanned image; and
    a step of designating a second region including character information to be used for storing the scanned image;
**characterized by**
a step of, in a case that there is an overlapping region in which the first region and the second region overlap, displaying an overlapping region on the preview so that a user is able to recognize the overlapping region.

**12.** A non-transitory computer-readable storage medium storing a program comprising instructions which, when the program is executed by a computer, cause the computer to carry out the steps of the method of claim 11.

## Patentansprüche

**1.** Bildverarbeitungsvorrichtung (110), umfassend:
eine Steuerung (210), die konfiguriert oder programmiert ist, zu funktionieren als:

eine Anzeigesteuereinheit (211), die eine Anzeigeeinrichtung (220) steuert, um eine Vorschau eines gescannten Bildes anzuzeigen;
einen ersten Bestimmungsabschnitt (211), der konfiguriert ist, einen ersten Bereich zu bestimmen, in dem eine Unkenntlichmachung auf das gescannte Bild angewandt wird; und
einen zweiten Bestimmungsabschnitt (211), der konfiguriert ist, einen zweiten Bereich zu bestimmen, der Zeicheninformationen enthält, die zum Speichern des gescannten Bildes zu verwenden sind, und
**dadurch gekennzeichnet, dass** in einem Fall, in dem es einen Überlappungsbereich gibt, in dem sich der erste Bereich und der zweite Bereich überlappen, die Anzeigesteuereinheit die Vorschau anzeigt, so dass ein Benutzer in der Lage ist, den Überlappungsbereich zu erkennen.

**2.** Bildverarbeitungsvorrichtung nach Anspruch 1, wobei,
wenn die Anzeigesteuereinheit die Anzeigeeinrichtung steuert, um den Überlappungsbereich in der Vorschau anzuzeigen, die Anzeigesteuereinheit ferner die Anzeigeeinrichtung steuert, um Optionen, die es dem Benutzer ermöglichen, eine für den Überlappungsbereich auszuführende Verarbeitung auszuwählen, zusammen mit dem angezeigten Überlappungsbereich anzuzeigen.

**3.** Bildverarbeitungsvorrichtung nach Anspruch 2, wobei
die Optionen eine erste Verarbeitung, die den ersten Bereich und den zweiten Bereich beibehält, eine zweite Verarbeitung, die eine Bestimmung des ersten Bereichs freigibt, und/oder eine dritte Verarbeitung, die eine Verwendung von aus dem Überlappungsbereich erhaltenen Zeicheninformationen freigibt, enthalten.

**4.** Bildverarbeitungsvorrichtung nach Anspruch 3, wobei
die Anzeigesteuereinheit ferner die Anzeigeeinrichtung steuert, um Informationen, die verwendet werden, wenn die dritte Verarbeitung ausgewählt wird und das gescannte Bild gespeichert wird, zusammen mit der Option der dritten Verarbeitung anzuzeigen, und wobei die angezeigten Informationen die aus dem Überlappungsbereich erhaltenen Zeicheninformationen nicht enthalten.

**5.** Bildverarbeitungsvorrichtung nach Anspruch 3 oder 4, wobei
in einem Fall, in dem der Überlappungsbereich ein Bereich ist, in dem sich ein Teil des zweiten Bereichs und der gesamte erste Bereich überlappen, die angezeigten Optionen ferner eine vierte Verarbeitung enthalten, die den ersten Bereich auf den gesamten zweiten Bereich in den Optionen erweitert.

**6.** Bildverarbeitungsvorrichtung nach einem der Ansprüche 1 bis 5, wobei
die Anzeigesteuereinheit die Anzeigeeinrichtung steuert, um den ersten Bereich anzuzeigen, so dass der Benutzer in der Lage ist, Zeicheninformationen in dem Überlappungsbereich visuell zu erkennen.

**7.** Bildverarbeitungsvorrichtung nach einem der Ansprüche 1 bis 6, wobei
die Anzeigesteuereinheit die Anzeigeeinrichtung steuert, um eine Kennzeichnung zum Unterscheiden des ersten Bereichs und des zweiten Bereichs in der Vorschau anzuzeigen, so dass es sowohl an den ersten Bereich als auch an den zweiten Bereich angrenzt.

**8.** Bildverarbeitungsvorrichtung nach einem der Ansprüche 1 bis 7, wobei
die Anzeigesteuereinheit die Anzeigeeinrichtung steuert, um den ersten Bereich und den zweiten Bereich in der Vorschau durch Ändern einer Farbe der Unkenntlichmachung und/oder einer Farbe eines Rahmens, der sowohl den ersten als auch den zweiten Bereich angibt, anzuzeigen.

**9.** Bildverarbeitungsvorrichtung nach einem der Ansprüche 1 bis 8, wobei
die Zeicheninformationen in einem Ordnernamen oder einem Dateinamen des gescannten Bildes verwendet werden.

**10.** Bildverarbeitungsvorrichtung nach einem der Ansprüche 1 bis 9,

wobei in einem Fall, in dem das gescannte Bild gespeichert ist, die Anzeigesteuereinheit die Anzeigeeinrichtung steuert, um ferner einen Dateinamen des gescannten Bildes und/oder einen Ordnernamen zum Speichern des gescannten Bildes anzuzeigen, wobei der Dateiname und der Ordnername die aus dem zweiten Bereich erhaltenen Zeicheninformationen enthalten, und

wobei in einem Fall, in dem das gescannte Bild nicht gespeichert ist, die Anzeigesteuereinheit die Anzeigeeinrichtung steuert, um den Dateinamen und den Ordnernamen, die die aus dem zweiten Bereich erhaltenen Zeicheninformationen enthalten, nicht anzuzeigen.

**11.** Bildverarbeitungsverfahren, umfassend:

einen Schritt des Anzeigens einer Vorschau eines gescannten Bildes auf einer Anzeigeeinrichtung (220);

einen Schritt des Bestimmens eines ersten Bereichs, in dem eine Unkenntlichmachung auf das gescannte Bild angewendet wird; und

einen Schritt des Bestimmens eines zweiten Bereichs, der Zeicheninformationen enthält, die zum Speichern des gescannten Bildes zu verwenden sind;

**gekennzeichnet durch**

einen Schritt des Anzeigens eines Überlappungsbereichs in der Vorschau, so dass ein Benutzer in der Lage ist, den Überlappungsbereich zu erkennen, in einem Fall, in dem es einen Überlappungsbereich gibt, in dem sich der erste Bereich und der zweite Bereich überlappen.

**12.** Nichtflüchtiges computerlesbares Speichermedium, das ein Programm speichert, das Anweisungen umfasst, die bei Ausführung des Programms durch einen Computer diesen dazu veranlassen, die Schritte des Verfahrens nach Anspruch 11 auszuführen.

## Revendications

**1.** Appareil de traitement d'image (110) comprenant : un dispositif de commande (210) configuré ou programmé pour fonctionner en tant que :

unité de commande d'affichage (211) qui commande un dispositif d'affichage (220) pour afficher un aperçu d'une image numérisée ;

première section de désignation (211) configurée pour désigner une première région où un masquage est appliqué à l'image numérisée ; et

seconde section de désignation (211) configurée pour désigner une seconde région incluant des informations de caractères à utiliser pour stocker l'image numérisée, et **caractérisé en ce que**,

dans le cas où il existe une région de chevauchement dans laquelle la première région et la seconde région se chevauchent, l'unité de commande d'affichage affiche l'aperçu afin qu'un utilisateur soit en mesure de discerner la région de chevauchement.

**2.** Appareil de traitement d'image selon la revendication 1, dans lequel,
si l'unité de commande d'affichage commande le dispositif d'affichage pour afficher la région de chevauchement sur l'aperçu, l'unité de commande d'affichage commande en outre le dispositif d'affichage pour afficher des options, qui permettent à l'utilisateur de sélectionner un traitement à exécuter pour la région de chevauchement, conjointement avec la région de chevauchement affichée.

**3.** Appareil de traitement d'image selon la revendication 2, dans lequel
les options incluent au moins l'un parmi un premier traitement qui conserve la première région et la seconde région, un deuxième traitement qui rejette la désignation de la première région et un troisième traitement qui rejette l'utilisation d'informations de caractères obtenues à partir de la région de chevauchement.

**4.** Appareil de traitement d'image selon la revendication 3, dans lequel
l'unité de commande d'affichage commande en outre le dispositif d'affichage pour afficher des informations, qui sont utilisées lorsque le troisième traitement est sélectionné et pour stocker l'image numérisée, conjointement avec l'option du troisième traitement, et dans lequel les informations affichées n'incluent pas les informations de caractères obtenues à partir de la région de chevauchement.

**5.** Appareil de traitement d'image selon la revendication 3 ou 4, dans lequel
dans un cas où la région de chevauchement est une région dans laquelle une partie de la seconde région et toute la première région se chevauchent, l'option affichée inclut en outre un quatrième traitement, qui étend la première région à toute la seconde région dans les options.

**6.** Appareil de traitement d'image selon l'une quelconque des revendications 1 à 5, dans lequel
l'unité de commande d'affichage commande le dispositif d'affichage pour afficher la première région de sorte que l'utilisateur soit en mesure de discerner visuellement des informations de caractères dans la région de chevauchement.

7. Appareil de traitement d'image selon l'une quelconque des revendications 1 à 6, dans lequel
l'unité de commande d'affichage commande le dispositif d'affichage pour afficher une étiquette pour différencier la première région et la seconde région dans l'aperçu de manière à ce qu'elle soit adjacente à chacune de la première région et de la seconde région.

8. Appareil de traitement d'image selon l'une quelconque des revendications 1 à 7, dans lequel
l'unité de commande d'affichage commande le dispositif d'affichage pour afficher la première région et la seconde région dans l'aperçu en changeant au moins l'une d'une couleur du masquage, d'une couleur d'un cadre indiquant chacune des première et seconde régions.

9. Appareil de traitement d'image selon l'une quelconque des revendications 1 à 8, dans lequel
les informations de caractères sont utilisées dans un nom de dossier ou un nom de fichier de l'image numérisée.

10. Appareil de traitement d'image selon l'une quelconque des revendications 1 à 9,

dans lequel, dans un cas où l'image numérisée est stockée, l'unité de commande d'affichage commande le dispositif d'affichage pour afficher en outre au moins l'un parmi un nom de fichier de l'image numérisée et un nom de dossier pour stocker l'image numérisée, le nom de fichier et le nom de dossier incluant les informations de caractères obtenues à partir de la seconde région, et
dans lequel, dans un cas où l'image numérisée n'est pas stockée, l'unité de commande d'affichage commande le dispositif d'affichage pour ne pas afficher le nom de fichier et le nom de dossier incluant les informations de caractères obtenues à partir de la seconde région.

11. Procédé de traitement d'image comprenant :

une étape d'affichage d'un aperçu d'une image numérisée sur un dispositif d'affichage (220) ;
une étape de désignation d'une première région où un masquage est appliqué à l'image numérisée ; et
une étape de désignation d'une seconde région incluant des informations de caractères à utiliser pour stocker l'image numérisée ;
**caractérisé par**
une étape, dans le cas où il y existe une région de chevauchement dans laquelle la première région et la seconde région se chevauchent, d'affichage d'une région de chevauchement sur l'aperçu de sorte qu'un utilisateur soit en mesure de discerner la région de chevauchement.

12. Support de stockage non transitoire lisible par ordinateur stockant un programme comprenant des instructions qui, lorsque le programme est exécuté par un ordinateur, amènent l'ordinateur à réaliser les étapes du procédé selon la revendication 11.

FIG. 1

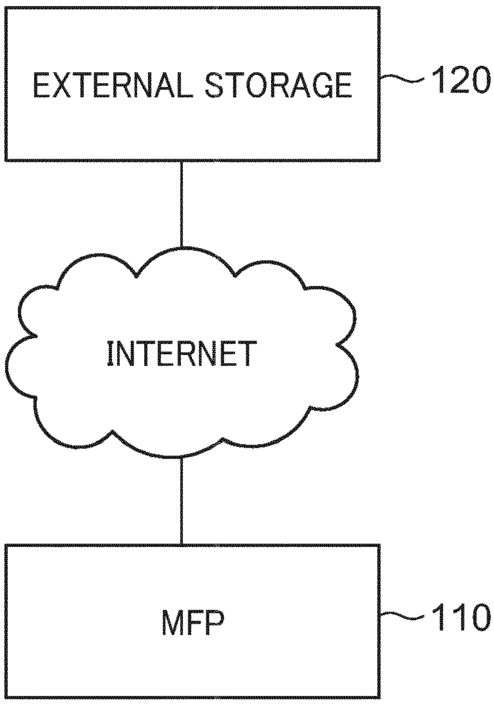

FIG. 2

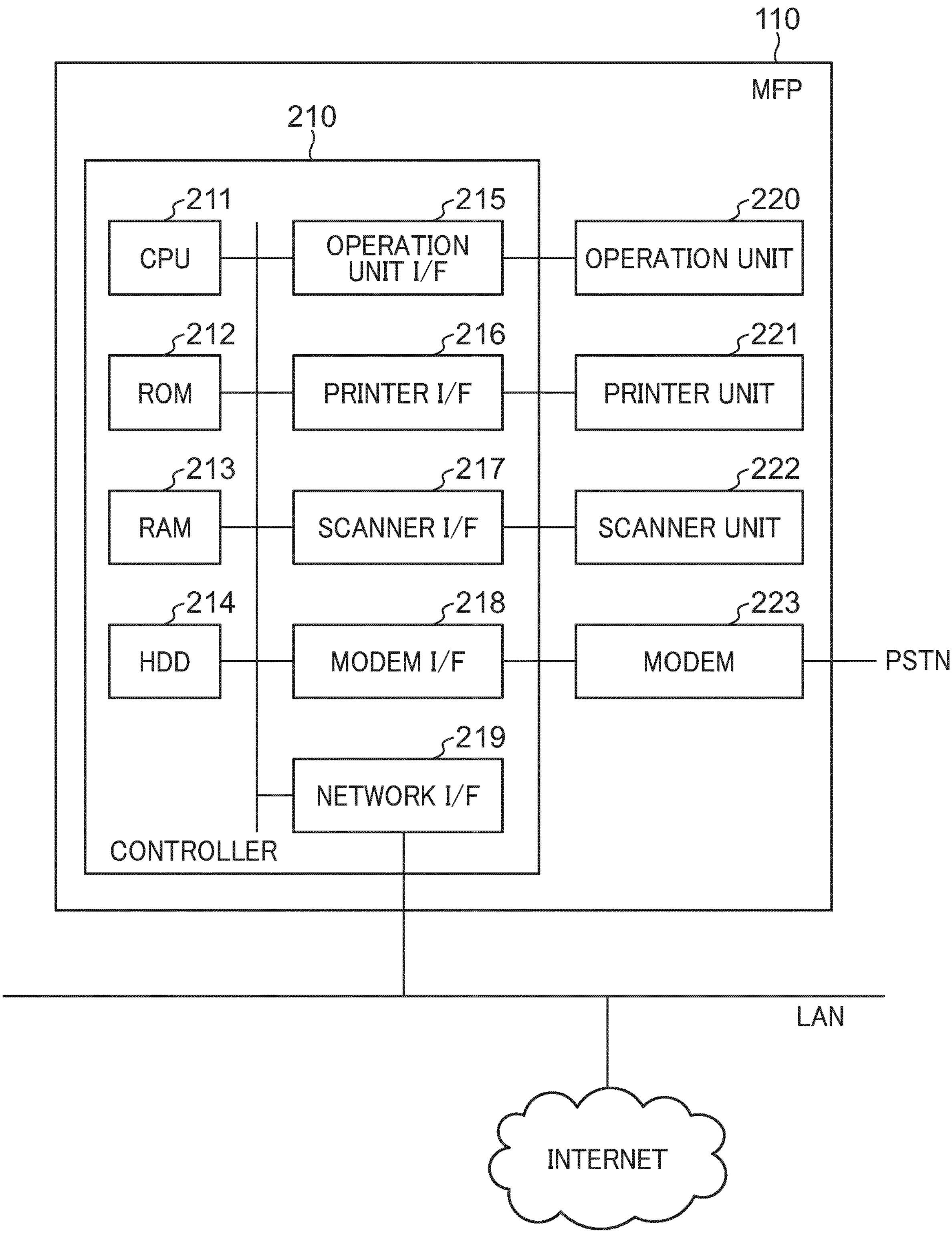
110
MFP
210
211
CPU
212
ROM
213
RAM
214
HDD
215
OPERATION UNIT I/F
216
PRINTER I/F
217
SCANNER I/F
218
MODEM I/F
219
NETWORK I/F
CONTROLLER
220
OPERATION UNIT
221
PRINTER UNIT
222
SCANNER UNIT
223
MODEM
PSTN
LAN
INTERNET

FIG. 3

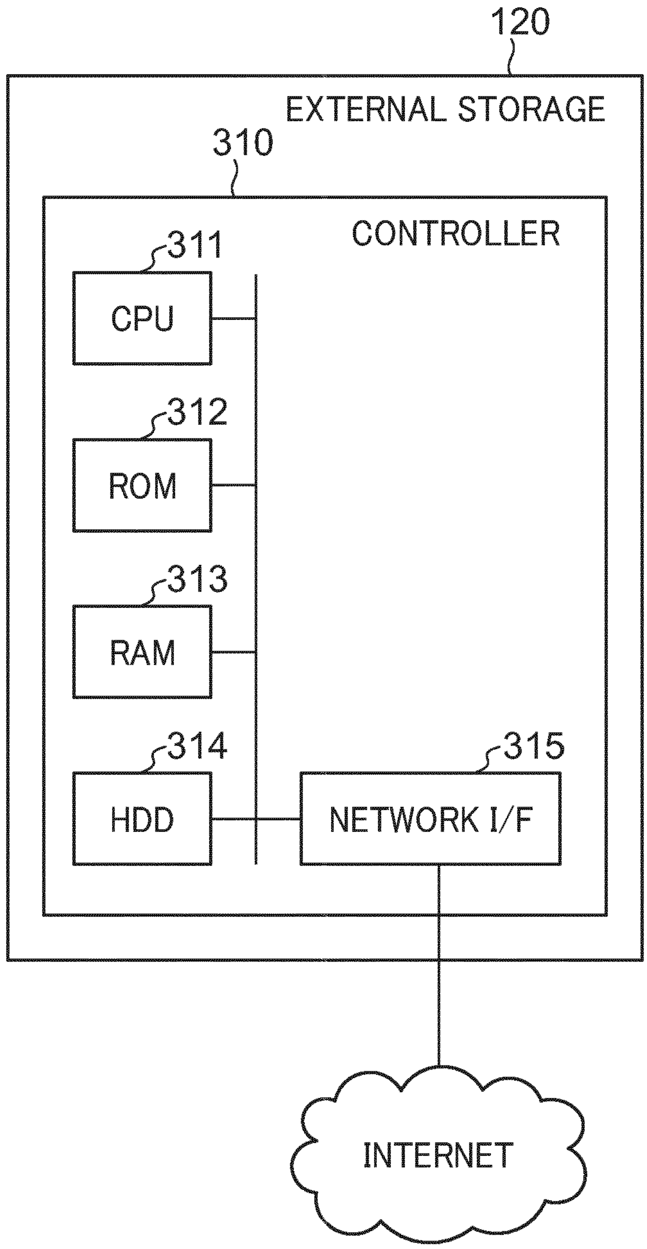
120
EXTERNAL STORAGE
310
CONTROLLER
311
CPU
312
ROM
313
RAM
314
HDD
315
NETWORK I/F
INTERNET

FIG. 4

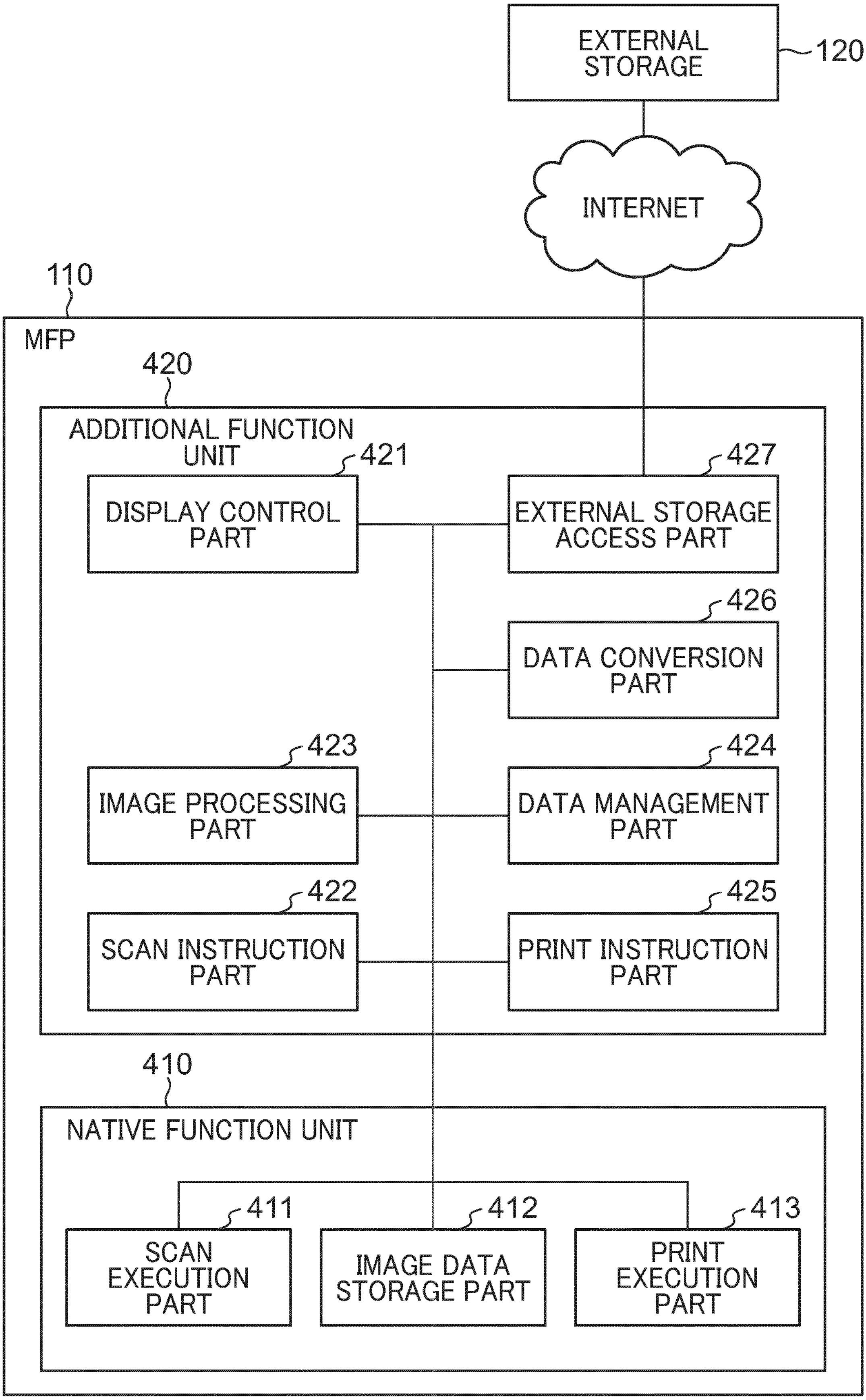
EXTERNAL STORAGE
120
INTERNET
110
MFP
420
ADDITIONAL FUNCTION UNIT
421
DISPLAY CONTROL PART
427
EXTERNAL STORAGE ACCESS PART
426
DATA CONVERSION PART
423
IMAGE PROCESSING PART
424
DATA MANAGEMENT PART
422
SCAN INSTRUCTION PART
425
PRINT INSTRUCTION PART
410
NATIVE FUNCTION UNIT
411
SCAN EXECUTION PART
412
IMAGE DATA STORAGE PART
413
PRINT EXECUTION PART

FIG. 5

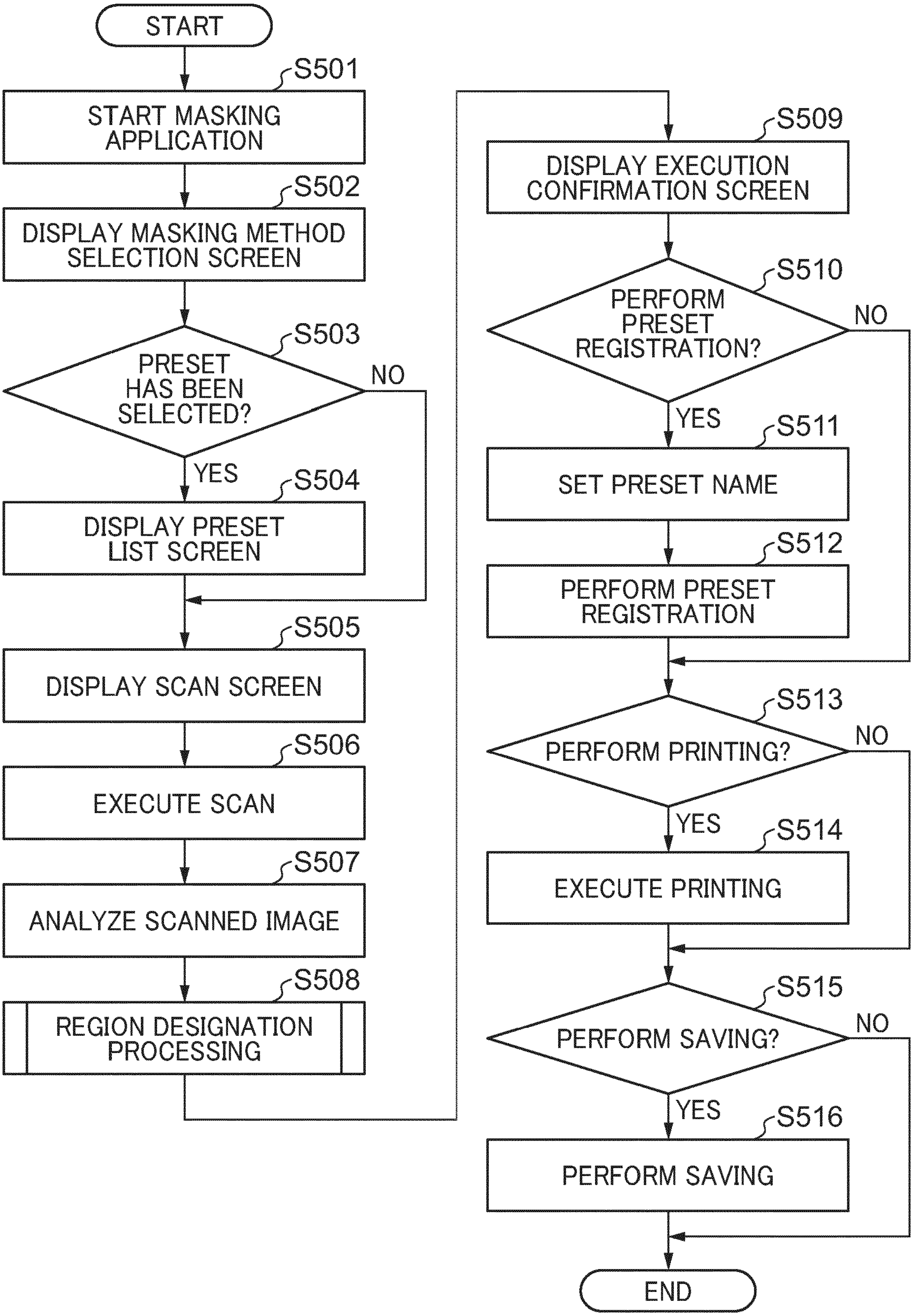
START
S501
START MASKING APPLICATION
S502
DISPLAY MASKING METHOD SELECTION SCREEN
S503
PRESET HAS BEEN SELECTED?
NO
YES
S504
DISPLAY PRESET LIST SCREEN
S505
DISPLAY SCAN SCREEN
S506
EXECUTE SCAN
S507
ANALYZE SCANNED IMAGE
S508
REGION DESIGNATION PROCESSING
S509
DISPLAY EXECUTION CONFIRMATION SCREEN
S510
PERFORM PRESET REGISTRATION?
NO
YES
S511
SET PRESET NAME
S512
PERFORM PRESET REGISTRATION
S513
PERFORM PRINTING?
NO
YES
S514
EXECUTE PRINTING
S515
PERFORM SAVING?
NO
YES
S516
PERFORM SAVING
END

FIG. 6

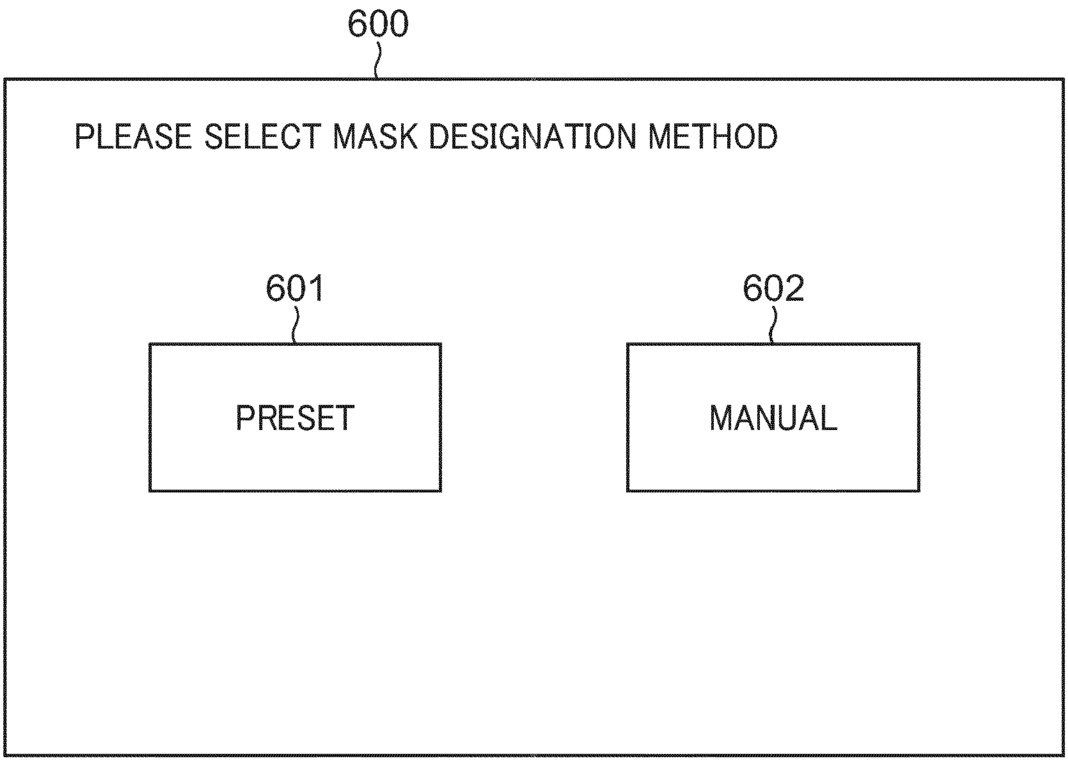
600
PLEASE SELECT MASK DESIGNATION METHOD
601
PRESET
602
MANUAL

FIG. 7

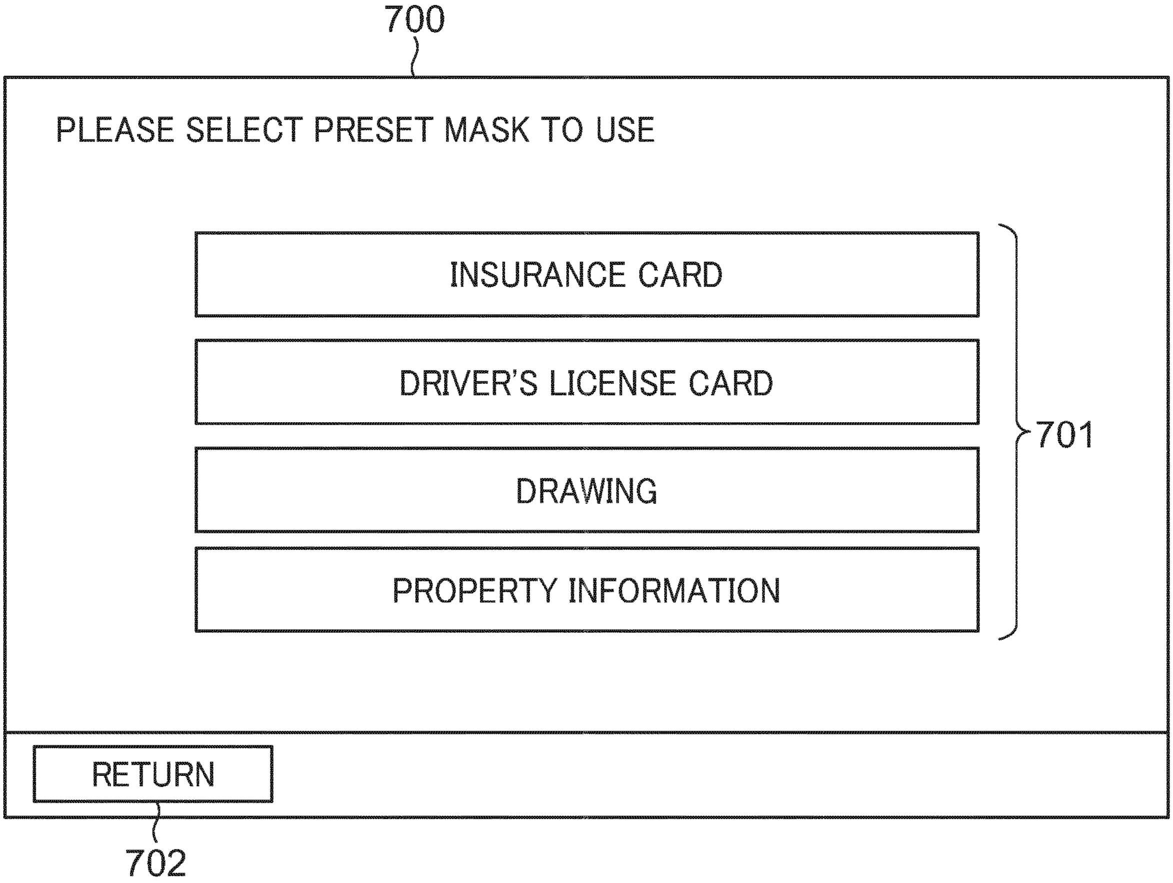
700
PLEASE SELECT PRESET MASK TO USE
INSURANCE CARD
DRIVER'S LICENSE CARD
DRAWING
PROPERTY INFORMATION
701
RETURN
702

*FIG. 8*

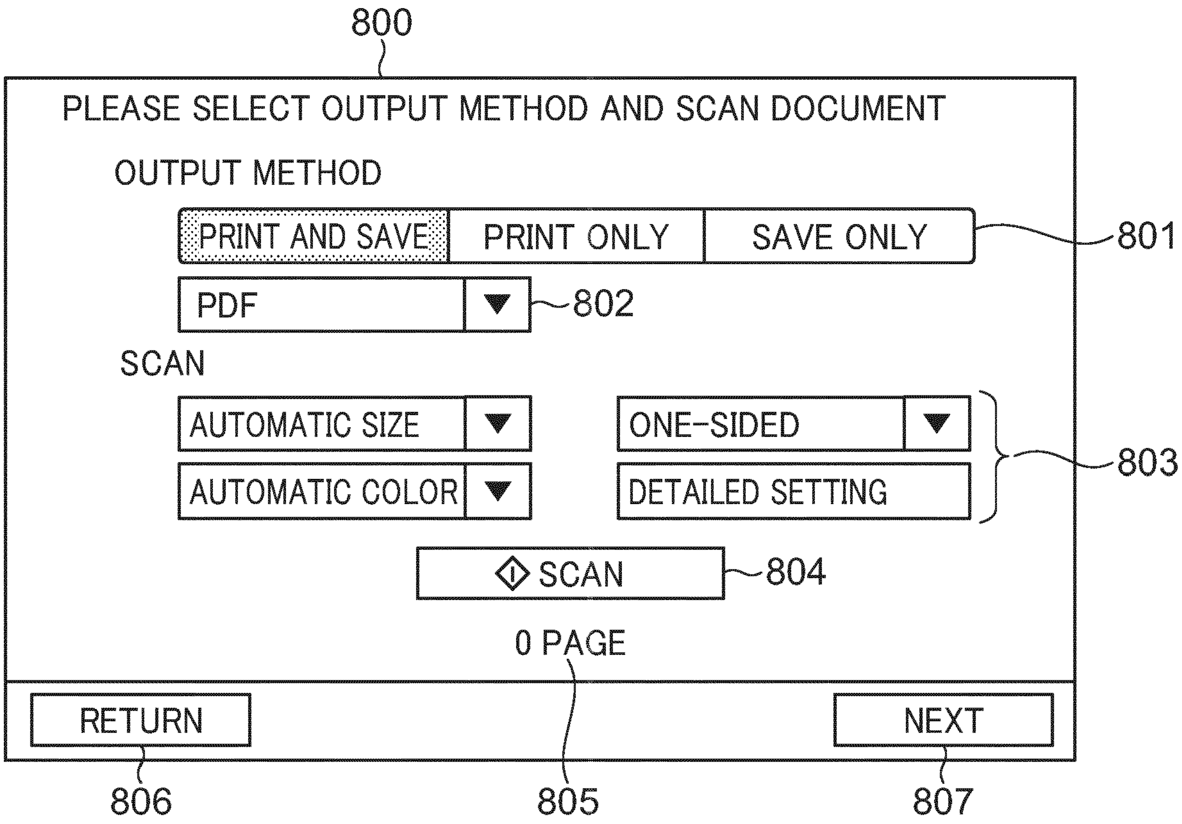
800
PLEASE SELECT OUTPUT METHOD AND SCAN DOCUMENT
OUTPUT METHOD
PRINT AND SAVE
PRINT ONLY
SAVE ONLY
801
PDF
802
SCAN
AUTOMATIC SIZE
ONE-SIDED
AUTOMATIC COLOR
DETAILED SETTING
803
SCAN
804
0 PAGE
RETURN
NEXT
806
805
807

FIG. 9

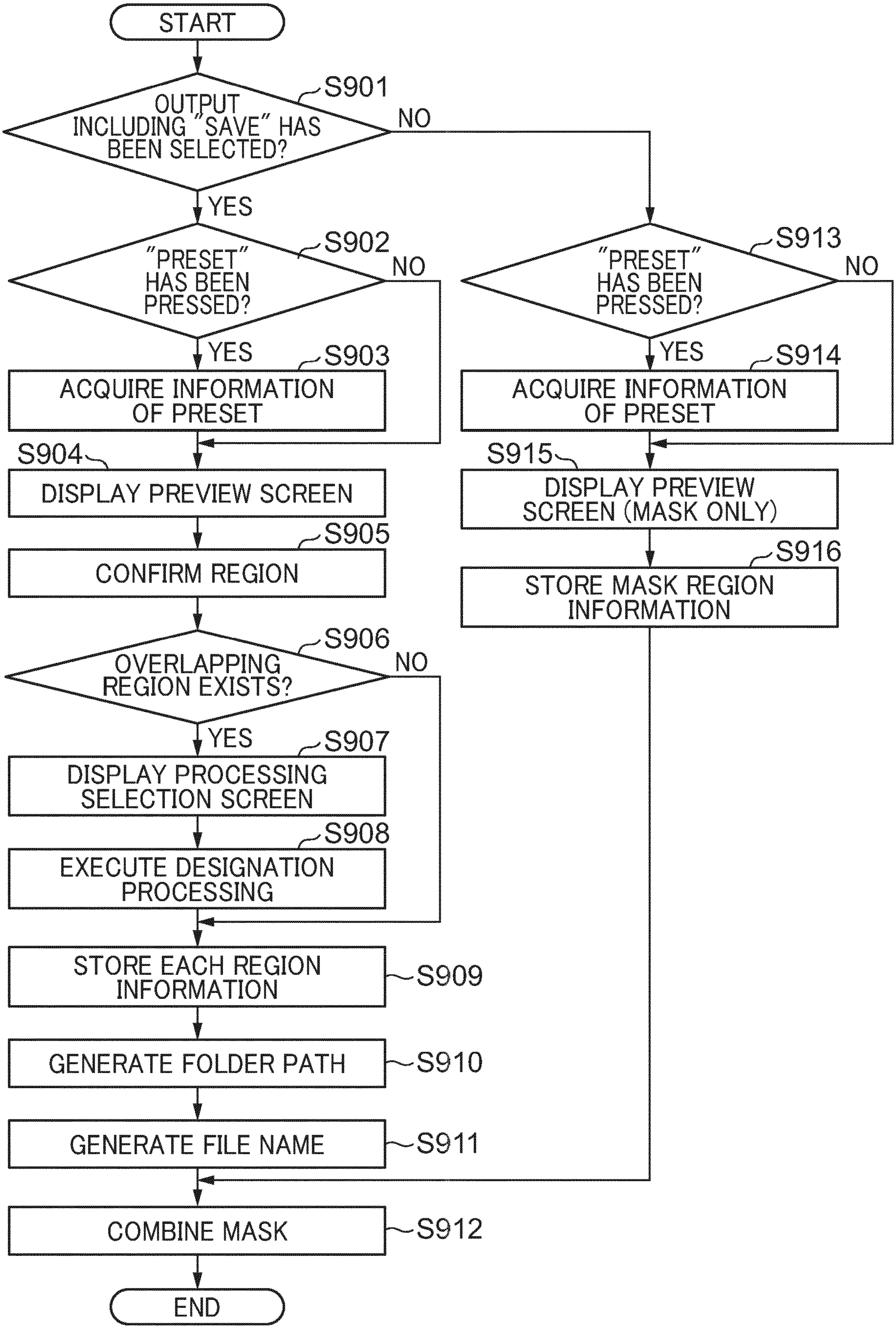
START
OUTPUT INCLUDING "SAVE" HAS BEEN SELECTED?
S901
NO
YES
"PRESET" HAS BEEN PRESSED?
S902
NO
YES
ACQUIRE INFORMATION OF PRESET
S903
S904
DISPLAY PREVIEW SCREEN
S905
CONFIRM REGION
OVERLAPPING REGION EXISTS?
S906
NO
YES
DISPLAY PROCESSING SELECTION SCREEN
S907
EXECUTE DESIGNATION PROCESSING
S908
STORE EACH REGION INFORMATION
S909
GENERATE FOLDER PATH
S910
GENERATE FILE NAME
S911
COMBINE MASK
S912
END
"PRESET" HAS BEEN PRESSED?
S913
NO
YES
ACQUIRE INFORMATION OF PRESET
S914
S915
DISPLAY PREVIEW SCREEN (MASK ONLY)
STORE MASK REGION INFORMATION
S916

FIG. 10A

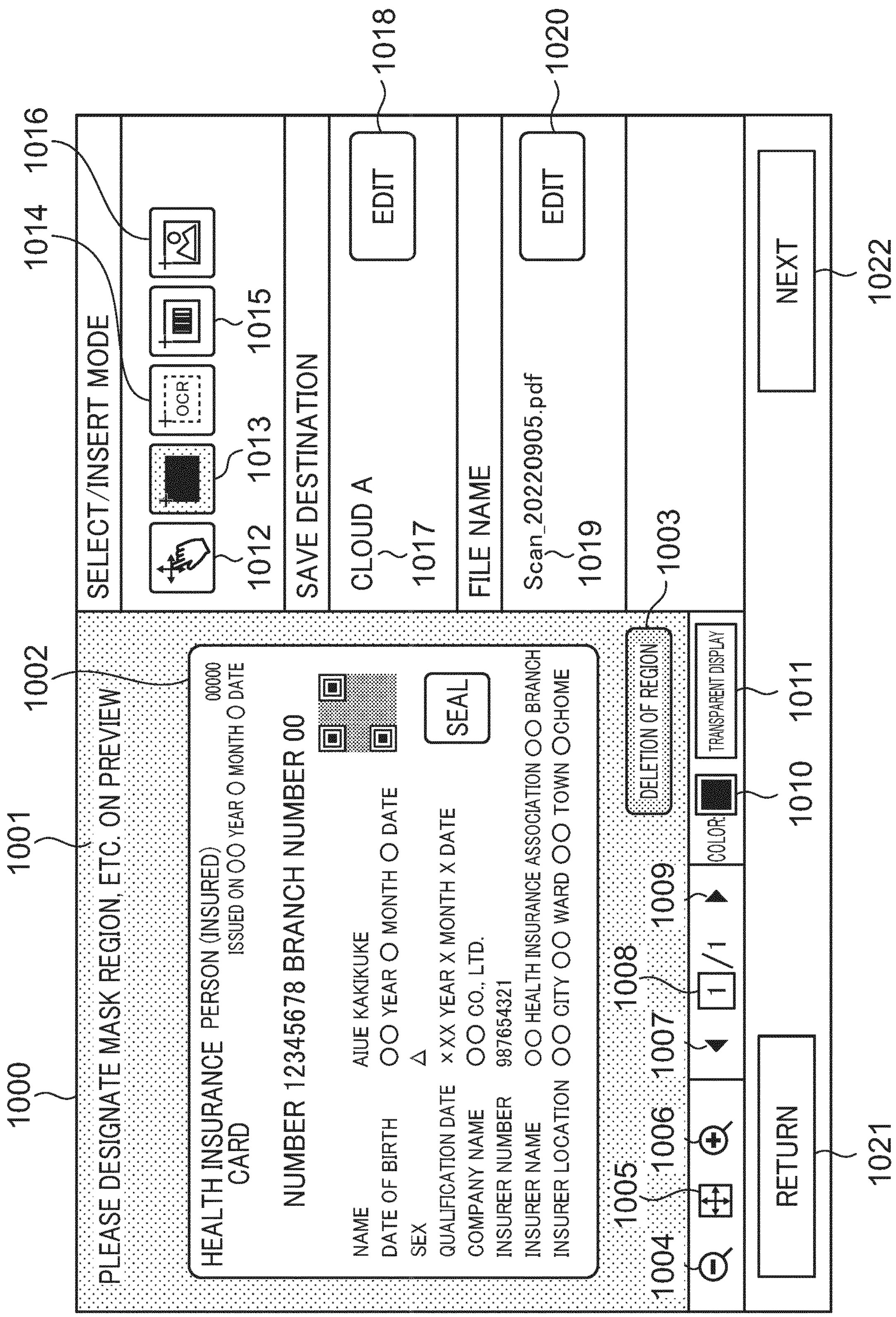

PLEASE DESIGNATE MASK REGION, ETC. ON PREVIEW
HEALTH INSURANCE CARD PERSON (INSURED)
ISSUED ON OO YEAR O MONTH O DATE
00000
NUMBER 12345678 BRANCH NUMBER 00
NAME AIUE KAKIKUKE
DATE OF BIRTH OO YEAR O MONTH O DATE
SEX Δ
QUALIFICATION DATE × XX YEAR X MONTH X DATE
COMPANY NAME OO CO., LTD.
INSURER NUMBER 987654321
INSURER NAME OO HEALTH INSURANCE ASSOCIATION OO BRANCH
INSURER LOCATION OO CITY OO WARD OO TOWN OCHOME
SEAL
DELETION OF REGION
COLOR
TRANSPARENT DISPLAY
1/1
SELECT/INSERT MODE
OCR
SAVE DESTINATION
CLOUD A
EDIT
FILE NAME
Scan_20220905.pdf
EDIT
RETURN
NEXT
1000
1001
1002
1003
1004
1005
1006
1007
1008
1009
1010
1011
1012
1013
1014
1015
1016
1017
1018
1019
1020
1021
1022

FIG. 10B

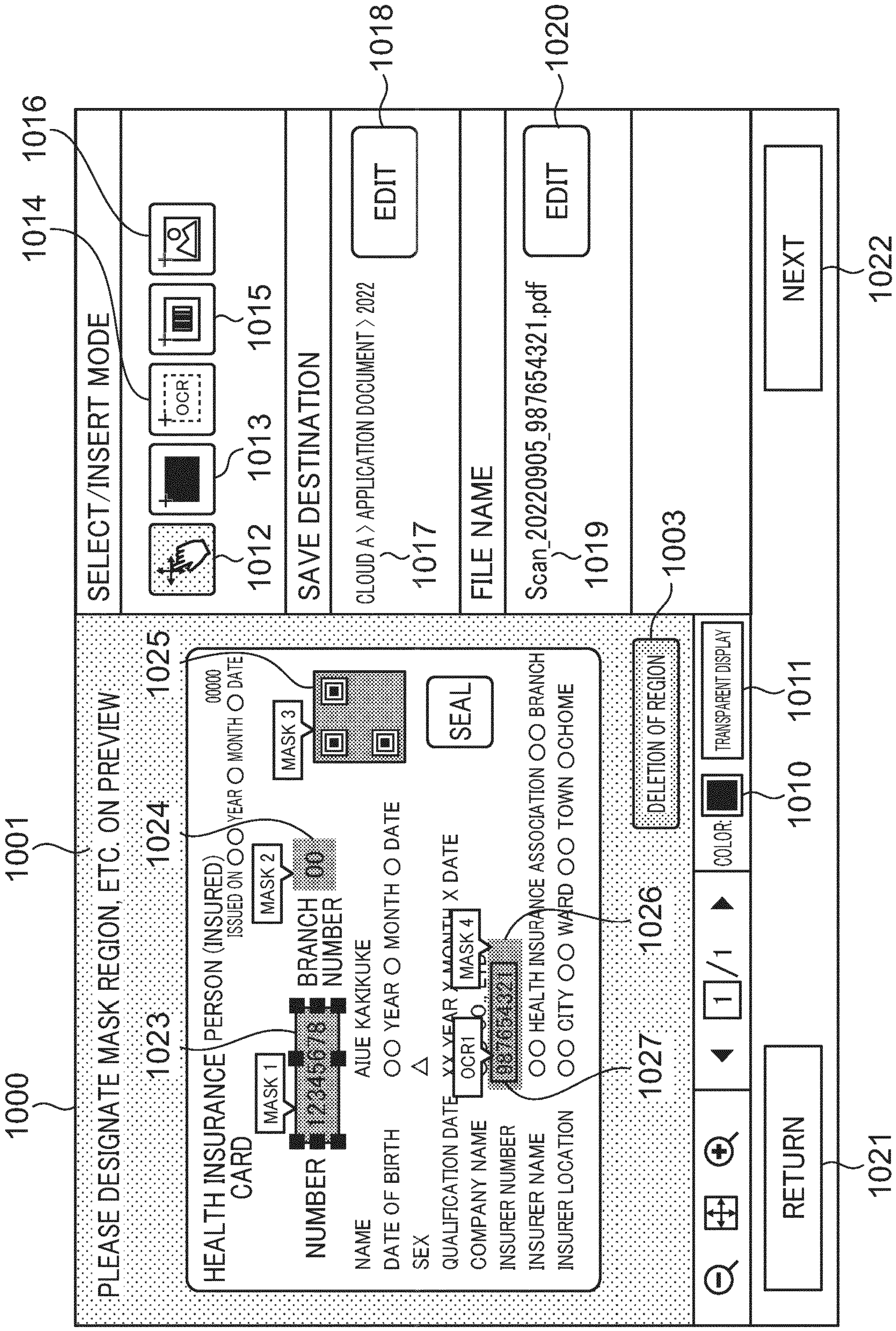
1000
1001
PLEASE DESIGNATE MASK REGION, ETC. ON PREVIEW
HEALTH INSURANCE CARD
PERSON (INSURED)
ISSUED ON ○○ YEAR ○ MONTH ○ DATE
00000
NUMBER
MASK 1
12345678
BRANCH NUMBER
MASK 2
00
MASK 3
SEAL
NAME
AIUE KAKIKUKE
DATE OF BIRTH
○○ YEAR ○ MONTH ○ DATE
SEX
△
QUALIFICATION DATE
XX YEAR Y MONTH X DATE
COMPANY NAME
OCR1
MASK 4
INSURER NUMBER
987654321
INSURER NAME
○○ HEALTH INSURANCE ASSOCIATION ○○ BRANCH
INSURER LOCATION
○○ CITY ○○ WARD ○○ TOWN ○CHOME
1023
1024
1025
1026
1027
DELETION OF REGION
1003
COLOR:
TRANSPARENT DISPLAY
1010
1011
1/1
RETURN
1021
NEXT
1022
SELECT/INSERT MODE
OCR
1012
1013
1014
1015
1016
SAVE DESTINATION
CLOUD A > APPLICATION DOCUMENT > 2022
1017
EDIT
1018
FILE NAME
Scan_20220905_987654321.pdf
1019
EDIT
1020

# FIG. 11A

1100A

| ID (1101) | TYPE (1102) | START POINT (1103) | END POINT (1104) | VALUE (1105) |
|---|---|---|---|---|
| MSK1 | MASK | (265, 136) | (476, 202) | #00000 |
| MSK2 | MASK | (580, 131) | (658, 196) | #00000 |
| MSK3 | MASK | (830, 194) | (976, 334) | #00000 |
| MSK4 | MASK | (321, 461) | (554, 514) | #00000 |
| OCR1 | CHARACTER | (330, 466) | (509, 504) | 987654321 |

# FIG. 11B

1100B

| ID (1111) | TYPE (1112) | START POINT (1113) | END POINT (1114) | VALUE (1115) |
|---|---|---|---|---|
| MSK1 | MASK | (265, 136) | (476, 202) | #00000 |
| MSK2 | MASK | (580, 131) | (658, 196) | #00000 |
| MSK3 | MASK | (830, 194) | (976, 334) | #00000 |
| MSK4 | MASK | (321, 461) | (471, 514) | #00000 |
| OCR1 | CHARACTER | (330, 466) | (509, 504) | 987654321 |

FIG. 12A

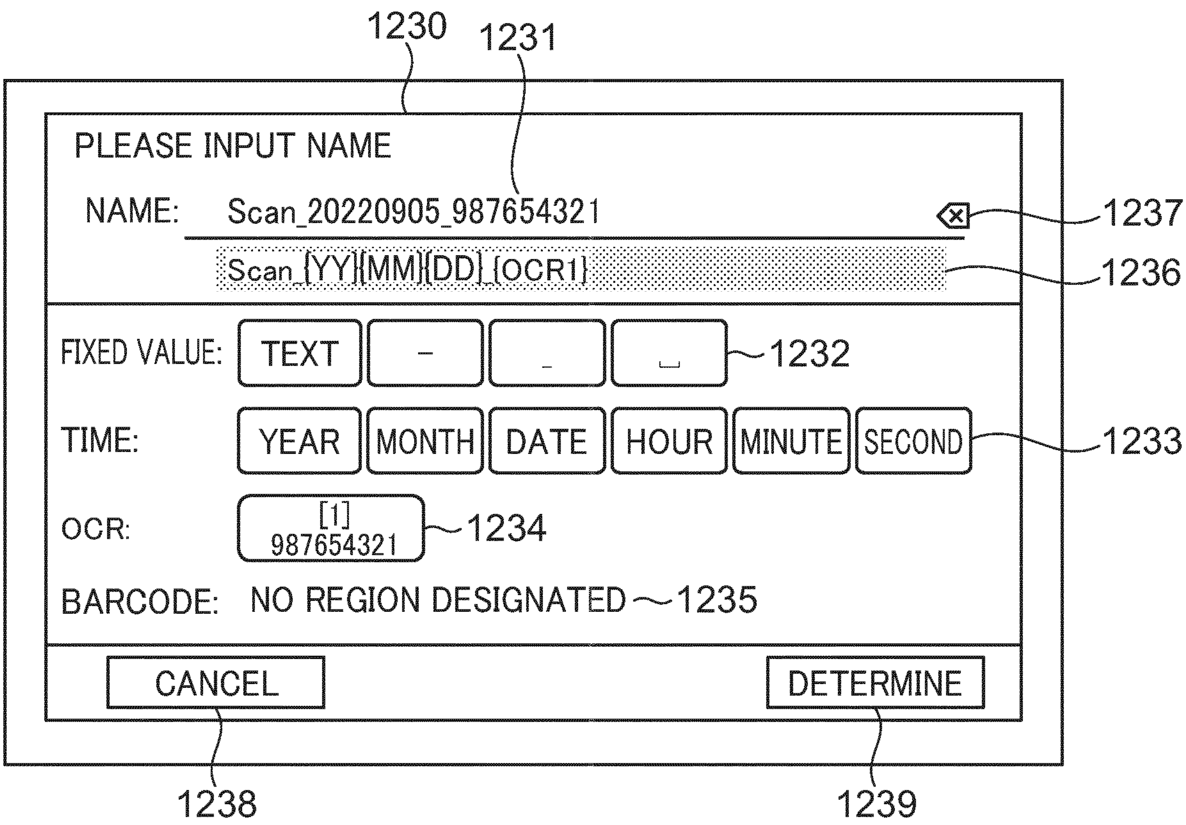


FIG. 12B

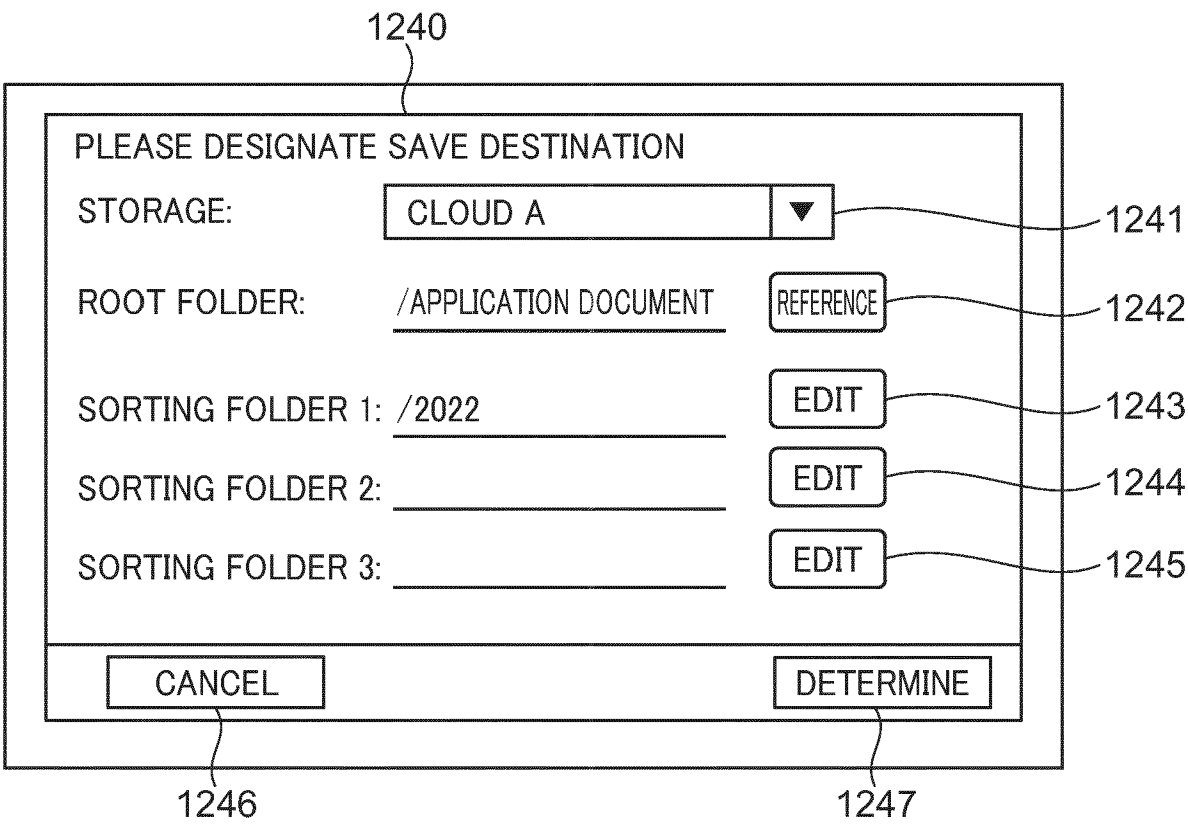

FIG. 13A

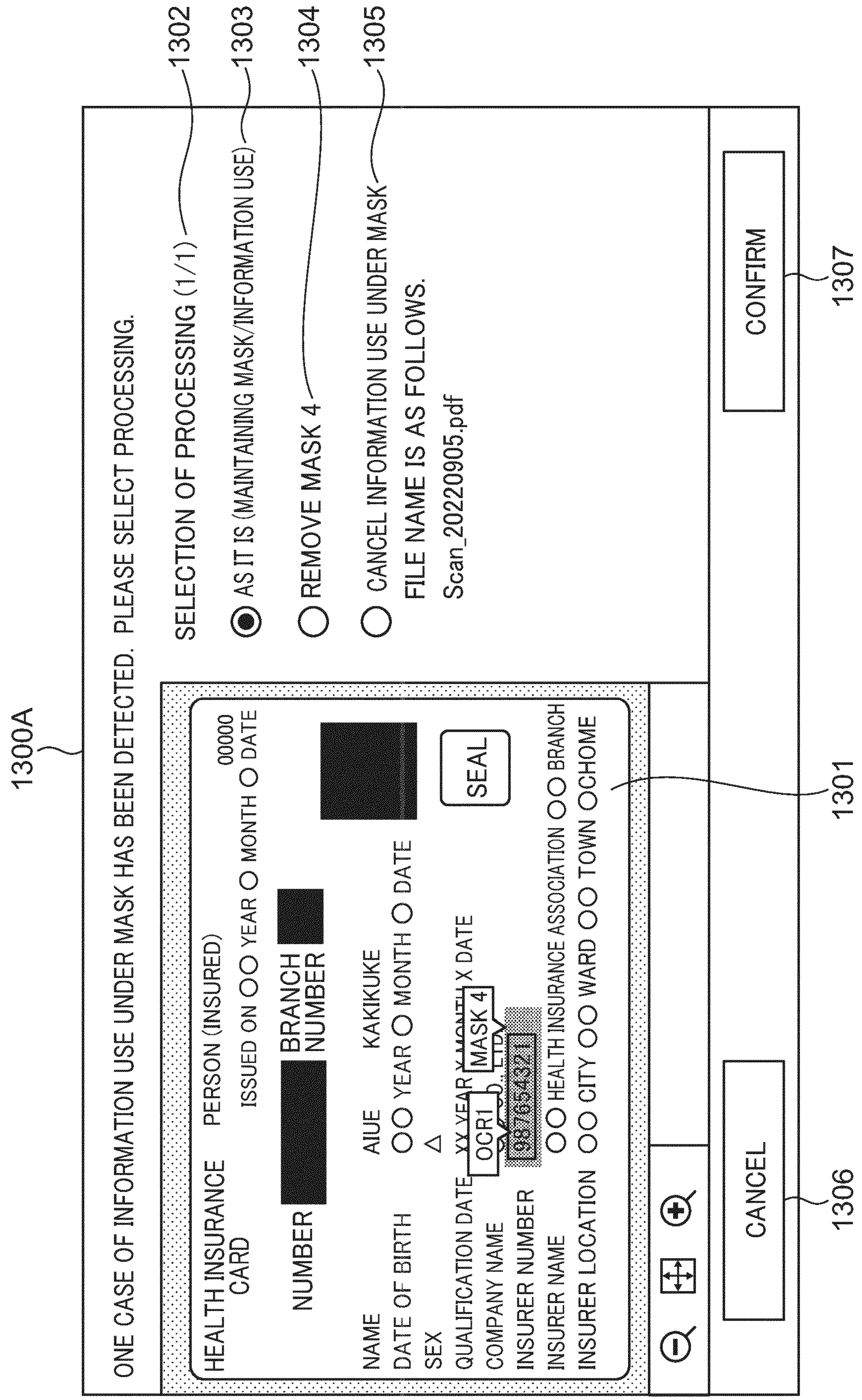
1300A
ONE CASE OF INFORMATION USE UNDER MASK HAS BEEN DETECTED. PLEASE SELECT PROCESSING.
HEALTH INSURANCE CARD
PERSON (INSURED)
ISSUED ON OO YEAR O MONTH O DATE
00000
NUMBER
BRANCH NUMBER
NAME
AIUE
KAKIKUKE
DATE OF BIRTH
OO YEAR O MONTH O DATE
SEX
△
QUALIFICATION DATE
XX YEAR X MONTH X DATE
COMPANY NAME
LTD.
SEAL
OCR1
MASK 4
INSURER NUMBER
987654321
INSURER NAME
OO HEALTH INSURANCE ASSOCIATION OO BRANCH
INSURER LOCATION
OO CITY OO WARD OO TOWN OCHOME
SELECTION OF PROCESSING (1/1)
AS IT IS (MAINTAINING MASK/INFORMATION USE)
REMOVE MASK 4
CANCEL INFORMATION USE UNDER MASK
FILE NAME IS AS FOLLOWS.
Scan_20220905.pdf
CANCEL
CONFIRM
1301
1302
1303
1304
1305
1306
1307

FIG. 13B

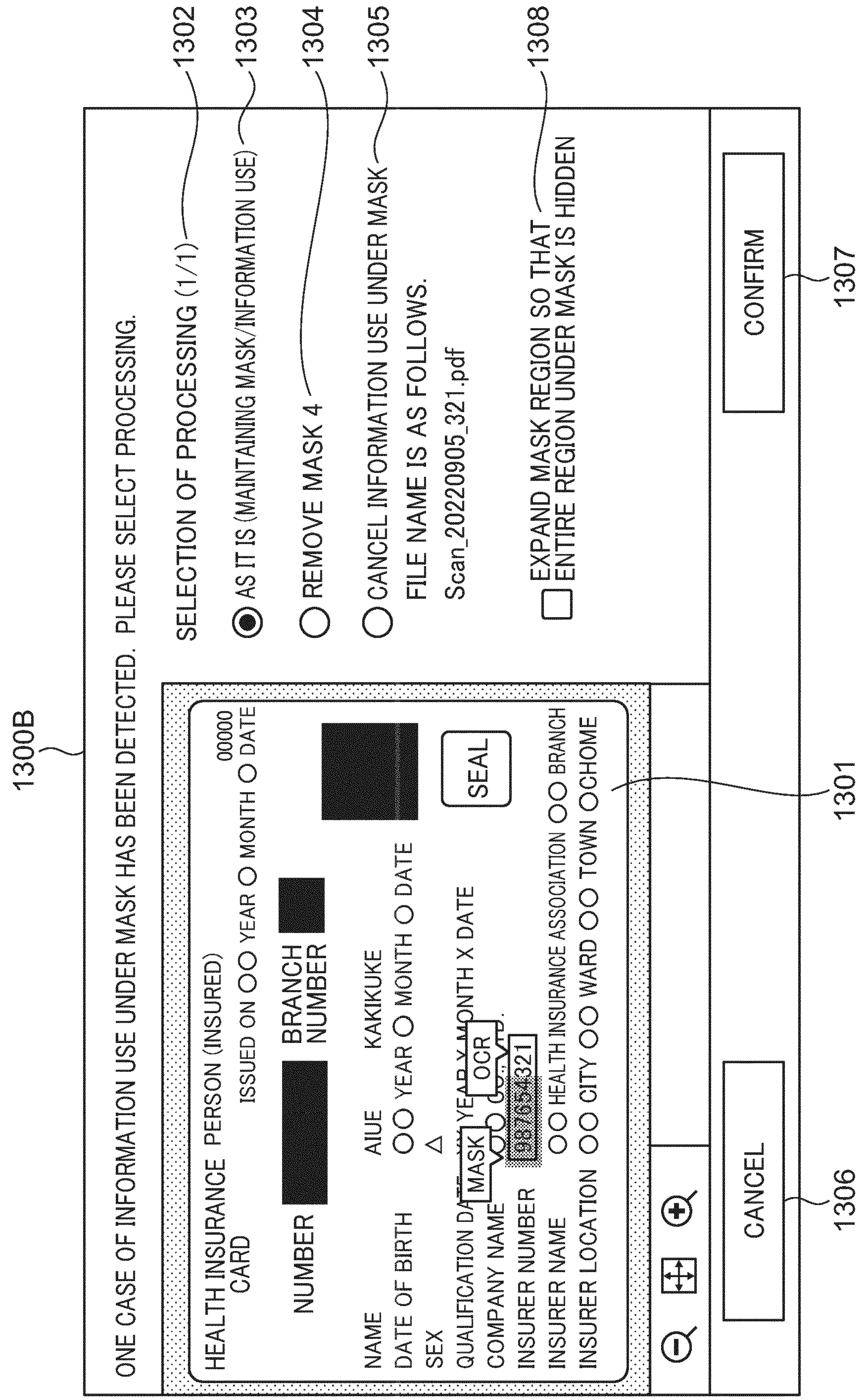
1300B
ONE CASE OF INFORMATION USE UNDER MASK HAS BEEN DETECTED. PLEASE SELECT PROCESSING.
HEALTH INSURANCE CARD
PERSON (INSURED)
ISSUED ON OO YEAR O MONTH O DATE
00000
NUMBER
BRANCH NUMBER
NAME
AIUE
KAKIKUKE
DATE OF BIRTH
OO YEAR O MONTH O DATE
SEX
△
QUALIFICATION DATE
COMPANY NAME
MASK
OCR
INSURER NUMBER
987654321
INSURER NAME
OO HEALTH INSURANCE ASSOCIATION OO BRANCH
INSURER LOCATION
OO CITY OO WARD OO TOWN OCHOME
SEAL
SELECTION OF PROCESSING (1/1)
AS IT IS (MAINTAINING MASK/INFORMATION USE)
REMOVE MASK 4
CANCEL INFORMATION USE UNDER MASK
FILE NAME IS AS FOLLOWS.
Scan_20220905_321.pdf
EXPAND MASK REGION SO THAT ENTIRE REGION UNDER MASK IS HIDDEN
CANCEL
CONFIRM
1301
1302
1303
1304
1305
1306
1307
1308

FIG. 14

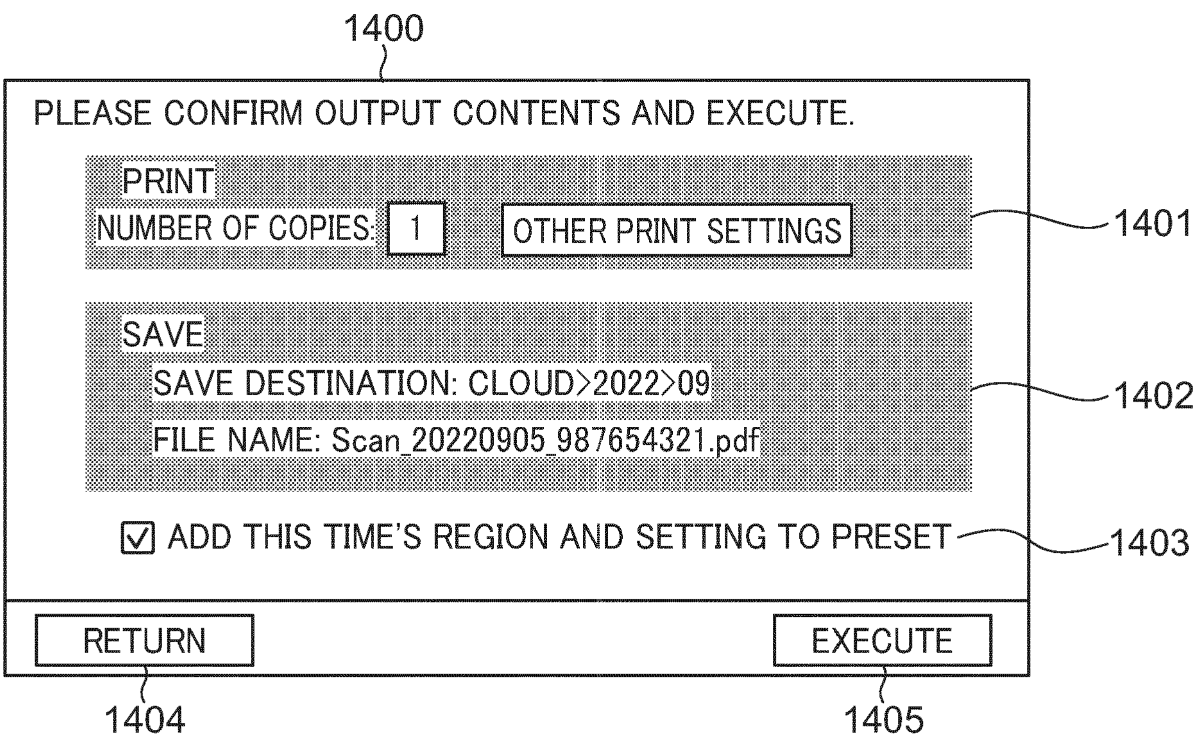
1400
PLEASE CONFIRM OUTPUT CONTENTS AND EXECUTE.
PRINT
NUMBER OF COPIES: 1
OTHER PRINT SETTINGS
1401
SAVE
SAVE DESTINATION: CLOUD>2022>09
FILE NAME: Scan_20220905_987654321.pdf
1402
ADD THIS TIME'S REGION AND SETTING TO PRESET
1403
RETURN
EXECUTE
1404
1405

# FIG. 15

1500

| 1501 | 1502 | 1503 | 1504 | 1505 | | | | | 1506 | | 1507 |
|---|---|---|---|---|---|---|---|---|---|---|---|
| BUTTON ID | NAME | OUTPUT METHOD | SCAN SETTING | REGION INFORMATION | | | | | SAVE SETTING | | PRINT SETTING |
| | | | | ID | TYPE | START POINT | END POINT | VALUE | SAVE DESTINATION | FILE NAME | |
| BTN001 | INSURANCE CARD | PRINT AND SAVE, PDF | AUTO SIZE, AUTO COLOR, ONE-SIDED, 300dpi, CHARACTER/PHOTO, NO MIXTURE | MSK1 | MASK | (265, 136) | (476, 202) | #00000 | CLOUD A>[YEAR]>[MONTH] | Scan_[YEAR][MONTH][DATE][OCR1] | ONE COPY, MONOCHROME, ONE-SIDED, 1 on 1 |
| | | | | MSK2 | MASK | (580, 131) | (658, 196) | #00000 | | | |
| | | | | MSK3 | MASK | (830, 194) | (976, 334) | #00000 | | | |
| | | | | MSK4 | MASK | (321, 461) | (471, 514) | #00000 | | | |
| | | | | OCR1 | CHARACTER | (330, 466) | (509, 504) | | | | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020205493 A
- US 10812682 B2
- JP 2020053856 A
- WO 2022189899 A1
- JP 2019068323 A
- JP 2022191705 A